(19)

Europäisches Patentamt
European Patent Office
Office européen des brevets

(11) **EP 4 322 620 A1**

(12) **EUROPEAN PATENT APPLICATION**
published in accordance with Art. 153(4) EPC

(43) Date of publication:
**14.02.2024 Bulletin 2024/07**

(51) International Patent Classification (IPC):
**H04W 48/16** (2009.01)

(21) Application number: **22806439.0**

(52) Cooperative Patent Classification (CPC):
**H04W 36/08; H04W 48/16; H04W 48/20**

(22) Date of filing: **19.04.2022**

(86) International application number:
**PCT/CN2022/087671**

(87) International publication number:
**WO 2022/237469 (17.11.2022 Gazette 2022/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.05.2021 CN 202110518513**

(71) Applicant: **Huawei Technologies Co., Ltd.**
**Longgang**
**Shenzhen, Guangdong 518129 (CN)**

(72) Inventors:
- **YI, Dandan**
  **Shenzhen, Guangdong 518129 (CN)**
- **QIANG, Li**
  **Shenzhen, Guangdong 518129 (CN)**
- **CHEN, Gong**
  **Shenzhen, Guangdong 518129 (CN)**
- **LUO, Xiaofeng**
  **Shenzhen, Guangdong 518129 (CN)**
- **WEN, Lutao**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **CELL SELECTION METHOD AND APPARATUS**

(57) This application provides a cell selection method. The method includes: An access stratum AS of a terminal device receives first information sent by a non-access stratum NAS, where the first information includes identity information of a first PLMN, and the first PLMN is a PLMN to be accessed by the terminal device; and the AS of the terminal device determines, based on the first information, whether to camp on a first candidate cell, where the first candidate cell supports the first PLMN, the first candidate cell satisfies a first camping condition, the first camping condition includes a cell selection criterion and a service requirement, and the service requirement is that a parameter reflecting signal quality of a cell satisfies a service threshold. In a cell selection process, the terminal device considers both the cell selection criterion and the service requirement. The service requirement is that a parameter reflecting signal quality of a cell satisfies a service threshold. Therefore, when selecting a cell for camping, the terminal device can preferentially select a cell that satisfies the service requirement, to improve user experience.

FIG. 3

**Description**

This application claims priority to Chinese Patent Application No. 202110518513.1, filed with the China National Intellectual Property Administration on May 12, 2021 and entitled "CELL SELECTION METHOD AND APPARATUS", which is incorporated herein by reference in its entirety.

**TECHNICAL FIELD**

This application relates to the field of communications, and more specifically, to a cell selection method and apparatus.

**BACKGROUND**

After being powered on, a terminal device needs to perform public land mobile network (public land mobile network, PLMN) selection and cell selection procedures, and then camps on and registers in the selected cell, to enjoy a network service. Specifically, a non-access stratum (non-access stratum, NAS) of a terminal device performs the public land mobile network (public land mobile network, PLMN) selection, and after a PLMN and a radio access technology (radio access technology, RAT) are selected, an access stratum (access stratum, AS) of the terminal device performs the cell selection procedure. After successfully camping on a cell, the terminal device may further search for a cell with better signal quality based on cell reselection criteria (cell reselection criteria). In the procedure of selecting the PLMN by the NAS, a selection condition mainly includes PLMN priority information. As a result, the terminal device may camp on a cell with relatively poor signal quality; consequently, user experience is affected.

**SUMMARY**

This application provides a cell selection method and apparatus, to implement more flexible cell selection and improve user experience.

According to a first aspect, a cell selection method is provided. The method includes: An access stratum AS of a terminal device receives first information sent by a non-access stratum NAS, where the first information includes identity information of a first PLMN, and the first PLMN is a PLMN to be accessed by the terminal device; and the AS of the terminal device determines, based on the first information, whether to camp on a first candidate cell, where the first candidate cell supports the first PLMN, the first candidate cell satisfies a first camping condition, the first camping condition includes a cell selection criterion and a service requirement, and the service requirement is a preset threshold of a parameter reflecting signal quality of a cell.

In this embodiment of this application, in a cell selection process, the terminal device considers both the cell selection criterion and the service requirement. The service requirement is a preset threshold of a parameter reflecting signal quality of a cell. Therefore, when selecting a cell for camping, the terminal device can preferentially select a cell that satisfies the service requirement. In comparison, information considered in methods of conventional technologies is not comprehensive. As a result, in some cases, although there is a cell that supports a lower priority PLMN and that has better signal strength, the terminal device still selects, based on PLMN priority information, a cell that supports a higher priority PLMN but has weaker signal strength. Alternatively, in a cell reselection process, although there is a cell that supports another PLMN and that has better signal quality, the terminal device still reselects and camps on a cell that supports a currently selected PLMN. By using the solution of this embodiment of the present invention, a problem that signal quality is relatively poor because the terminal device preferentially camps on a cell that satisfies only the cell selection criterion is avoided, thereby improving user experience. With reference to the first aspect, in a possible implementation, the service requirement includes at least one of the following: a preset threshold of reference signal received power of a cell, a preset threshold of an RRC link establishment failure rate of a cell, a preset threshold of an RLC block error rate BLER of a cell, and a preset threshold of a quantity of times of RLC reestablishment of a cell.

With reference to the first aspect, in another possible implementation of the first aspect, that the AS of the terminal device determines, based on the first information, whether to camp on a first candidate cell includes: The AS searches for the first candidate cell based on the first information; and if the AS finds the first candidate cell, the AS determines to camp on the first candidate cell. With reference to the first aspect, in another possible implementation of the first aspect, the AS searches for the first candidate cell based on the first information; if the AS does not find the first candidate cell, the AS determines not to camp on the first candidate cell; and the AS determines a second candidate cell, where the second candidate cell includes a cell that is the first one found by the AS and that satisfies only the cell selection criterion.

With reference to the first aspect, in another possible implementation of the first aspect, after the AS determines the second candidate cell, the AS sends first indication information to the NAS, where the first indication information indicates the NAS to redetermine a PLMN to be accessed by the terminal device; the AS receives second indication information sent by the NAS; and if the second indication information indicates that no PLMN is available, the AS determines to camp on the second candidate cell; or if the second indication information includes identity information of a second PLMN, the AS determines, based on the second indication information, whether to camp on a third candidate cell, where the third candidate cell supports the second PLMN, and the third candidate cell satisfies the first camping condition.

With reference to the first aspect, in another possible implementation of the first aspect, after the AS determines not to camp on the first candidate cell, the AS sends information about a third PLMN to the NAS, where the third PLMN is a PLMN in an ambient environment found by the AS, and the information about the third PLMN includes identity information of the third PLMN and information about whether a cell supporting the third PLMN satisfies the service requirement. With reference to the first aspect, in another possible implementation of the first aspect, before the access stratum AS of the terminal device receives the first information sent by the non-access stratum NAS, the AS searches for a fourth PLMN in a full band, where the fourth PLMN is a PLMN in an ambient environment. The AS sends second information to the NAS, where the second information includes identity information of the fourth PLMN and parameter information reflecting signal quality of a first cell, and the first cell is a cell supporting the fourth PLMN. With reference to the first aspect, in another possible implementation of the first aspect, the second information further includes identity information of the first cell.

With reference to the first aspect, in another possible implementation of the first aspect, the first information further includes identity information of the first candidate cell. The identity information of the first candidate cell is determined by the NAS based on the service requirement and the second information. The AS determines, based on the identity information of the first candidate cell, to camp on the first candidate cell.

According to a second aspect, a cell selection method is provided. The method includes: An access stratum AS of a terminal device receives first information sent by a non-access stratum NAS, where the first information includes identity information of a first PLMN, and the first PLMN is a PLMN to be accessed by the terminal device; the AS of the terminal device determines, based on the first information, to camp on a first candidate cell, where the first candidate cell supports the first PLMN; and the AS determines whether the first candidate cell satisfies a first camping condition, where the first camping condition includes a cell selection criterion and a service requirement, and the service requirement is a preset threshold of a parameter reflecting signal quality of a cell.

In this embodiment of this application, in a cell selection process, the terminal device considers both the cell selection criterion and the service requirement. The service requirement is a preset threshold of a parameter reflecting signal quality of a cell. Therefore, when selecting a cell for camping, the terminal device can preferentially select a cell that satisfies the service requirement. In comparison, information considered in methods of conventional technologies is not comprehensive. As a result, in some cases, although there is a cell that supports a lower priority PLMN and that has better signal strength, the terminal device still selects, based on PLMN priority information, a cell that supports a higher priority PLMN but has weaker signal strength. Alternatively, in a cell reselection process, although there is a cell that supports another PLMN and that has better signal quality, the terminal device still reselects and camps on a cell that supports a currently selected PLMN. By using the solution of this embodiment of the present invention, a problem that signal quality is relatively poor because the terminal device preferentially camps on a cell that satisfies only the cell selection criterion is avoided, thereby improving user experience. With reference to the second aspect, in a possible implementation of the second aspect, the service requirement includes at least one of the following: a preset threshold of reference signal received power of a cell, a preset threshold of an RRC link establishment failure rate of a cell, a preset threshold of an RLC block error rate BLER of a cell, and a preset threshold of a quantity of times of RLC reestablishment of a cell.

With reference to the second aspect, in another possible implementation of the second aspect, the terminal device is configured with a barred cell list. If the AS determines that the first candidate cell does not satisfy the first camping condition, the AS adds identity information of the first candidate cell to the barred cell list; and the AS sets duration when the first candidate cell is barred. With reference to the second aspect, in another possible implementation of the second aspect, the AS sends first indication information to the NAS, where the first indication information indicates the NAS to redetermine a PLMN to be accessed by the terminal device; the AS receives second indication information sent by the NAS; if the second indication information indicates that no PLMN is available, the AS searches for a cell that satisfies the cell selection criterion in the barred cell list to camp on; or if the second indication information includes identity information of a second PLMN, the AS determines, based on the second indication information, to camp on a third candidate cell, where the third candidate cell supports the second PLMN.

With reference to the second aspect, in another possible implementation of the second aspect, the AS determines that the terminal device satisfies a cell reselection condition; the AS determines whether a cell on which the terminal device currently camps satisfies the first camping condition; and if the cell on which the terminal device currently camps satisfies the first camping condition, the AS determines to reselect a cell that supports an equivalent PLMN and satisfies the first camping condition to camp on; if the cell on which the terminal device currently camps satisfies only the cell selection criterion, the AS determines to preferentially reselect a cell that supports an equivalent PLMN and satisfies the first camping condition to camp on; or the AS determines to reselect a cell that supports an equivalent PLMN and satisfies only the cell selection criterion to camp on.

According to a third aspect, a cell selection method is provided. The method includes: A non-access stratum NAS of a terminal device determines a first PLMN, where the first PLMN is a PLMN to be accessed by the terminal device; and the NAS sends first information to an access stratum AS of the terminal device, where the first information is used by the AS to determine whether to camp on a first candidate cell, the first information includes the identity information of the first PLMN, the first candidate cell supports the first PLMN, the first candidate cell satisfies a first camping condition, the first camping condition includes a cell selection criterion and a service requirement, and the service requirement is a preset threshold of a parameter reflecting signal quality of a cell.

In this embodiment of this application, in a cell selection process, the terminal device considers both the cell selection criterion and the service requirement. The service requirement is a preset threshold of a parameter reflecting signal quality of a cell. Therefore, when selecting a cell for camping, the terminal device can preferentially select a cell that satisfies the service requirement. In comparison, information considered in methods of conventional technologies is not comprehensive. As a result, in some cases, although there is a cell that supports a lower priority PLMN and that has better signal strength, the terminal device still selects, based on PLMN priority information, a cell that supports a higher priority PLMN but has weaker signal strength. Alternatively, in a cell reselection process, although there is a cell that supports another PLMN and that has better signal quality, the terminal device still reselects and camps on a cell that supports a currently selected PLMN. By using the solution of this embodiment of the present invention, a problem that signal quality is relatively poor because the terminal device preferentially camps on a cell that satisfies only the cell selection criterion is avoided, thereby improving user experience. With reference to the third aspect, in a possible implementation of the third aspect, the service requirement includes at least one of the following: a preset threshold of reference signal received power of a cell, a preset threshold of an RRC link establishment failure rate of a cell, a preset threshold of an RLC block error rate BLER of a cell, and a preset threshold of a quantity of times of RLC reestablishment of a cell.

With reference to the third aspect, in another possible implementation of the third aspect, the NAS receives first indication information sent by the AS, where the first indication information indicates the NAS to redetermine a PLMN to be accessed by the terminal device. The NAS sends second indication information to the AS, where the second indication information indicates that no PLMN is available, so that the AS determines to camp on a second candidate cell, and the second candidate cell is a cell that is the first one found by the AS and that satisfies only the cell selection criterion; or the second indication information includes identity information of a second PLMN, the second indication information is used by the AS to determine whether to camp on a third candidate cell, the third candidate cell supports the second PLMN, and the third candidate cell satisfies the first camping condition.

With reference to the third aspect, in another possible implementation of the third aspect, the NAS receives information about a third PLMN sent by the AS, where the third PLMN is a PLMN in an ambient environment found by the AS, and the information about the third PLMN includes identity information of the third PLMN and information about whether a cell supporting the third PLMN satisfies the service requirement; and the NAS sends second indication information to the AS, where the second indication information includes identity information of a second PLMN, the second PLMN includes a PLMN supported by a cell that satisfies the service requirement and that is in the third PLMN, the second indication information is used by the AS to determine whether to camp on a third candidate cell, the third candidate cell supports the second PLMN, and the third candidate cell satisfies the first camping condition.

With reference to the third aspect, in another possible implementation of the third aspect, before the non-access stratum NAS of the terminal device determines the first PLMN, the NAS receives second information sent by the AS, where the second information includes identity information of a fourth PLMN and parameter information reflecting signal quality of a first cell, the first cell is a cell supporting the fourth PLMN, and the fourth PLMN is a PLMN in an ambient environment searched by the AS in a full band.

With reference to the third aspect, in another possible implementation of the third aspect, the non-access stratum NAS of the terminal device determines that a PLMN corresponding to a cell that is in the first cell and whose parameter reflecting the signal quality of the first cell satisfies the service requirement is the first PLMN.

With reference to the third aspect, in another possible implementation of the third aspect, the second information further includes identity information of the first cell. Before the non-access stratum NAS of the terminal device determines the first PLMN, the NAS determines identity information of the first candidate cell based on the identity information of the first cell and the service requirement, where the identity information of the first candidate cell is used by the AS to determine to camp on the first candidate cell.

According to a fourth aspect, a cell selection method is provided. The method includes: A non-access stratum NAS of a terminal device determines a first PLMN, where the first PLMN is a PLMN to be accessed by the terminal device; and the NAS sends first information to an access stratum AS of the terminal device, where the first information is used by the AS to determine to camp on a first candidate cell, and determine whether the first candidate cell satisfies a first camping condition, the first camping condition includes a cell selection criterion and a service requirement, the service requirement is a preset threshold of a parameter reflecting signal quality of a cell, and the first candidate cell supports the first PLMN.

In this embodiment of this application, in a cell selection process, the terminal device considers both the cell selection criterion and the service requirement. The service requirement is a preset threshold of a parameter reflecting signal quality of a cell. Therefore, when selecting a cell for camping, the terminal device can preferentially select a cell that satisfies the service requirement. In comparison, information considered in methods of conventional technologies is not comprehensive. As a result, in some cases, although there is a cell that supports a lower priority PLMN and that has better signal strength, the terminal device still selects, based on PLMN priority information, a cell that supports a higher priority PLMN but has weaker signal strength. Alternatively, in a cell reselection process, although there is a cell that supports another PLMN and that has better signal quality, the terminal device still reselects and camps on a cell that supports a currently selected PLMN. By using the solution of this embodiment of the present invention, a problem that signal quality is relatively poor because the terminal device preferentially camps on a cell that satisfies only the cell selection criterion is avoided, thereby improving user experience. With reference to the fourth aspect, in a possible implementation of the fourth aspect, the service requirement includes at least one of the following: a preset threshold of reference signal received power of a cell, a preset threshold of an RRC link establishment failure rate of a cell, a preset threshold of an RLC block error rate BLER of a cell, and a preset threshold of a quantity of times of RLC reestablishment of a cell.

With reference to the fourth aspect, in another possible implementation of the fourth aspect, the terminal device is configured a barred cell list. The barred cell list is used by the AS to add identity information of the first candidate cell to the barred cell list when the AS determines that the first candidate cell does not satisfy the first camping condition.

With reference to the fourth aspect, in another possible implementation of the fourth aspect, the NAS receives first indication information sent by the AS, where the first indication information indicates the NAS to redetermine a PLMN to be accessed by the terminal device. The NAS sends second indication information to the AS, where the second indication information indicates that no PLMN is available, and the second indication information is used by the AS to determine to search for a cell that satisfies the cell selection criterion in the barred cell list to camp on; or the second indication information includes identity information of a second PLMN, the second indication information is used by the AS to determine to camp on a third candidate cell, and the third candidate cell supports the second PLMN.

With reference to the fourth aspect, in another possible implementation of the fourth aspect, the NAS obtains equivalent PLMN information through a first network device.

With reference to the fourth aspect, in another possible implementation of the fourth aspect, the NAS sends a registration request message to the first network device, where the registration request message is used for requesting to register the terminal device with the first candidate cell, and the registration request message includes location information of the first candidate cell. The NAS receives a registration request acknowledgment message sent by the first network device, where the registration request acknowledgment message includes the equivalent PLMN information, and the equivalent PLMN information is determined by the first network device based on the location information of the first candidate cell.

According to a fifth aspect, a terminal device is provided, including a second processing unit. The second processing unit is configured to receive first information sent by a first processing unit, where the first information includes identity information of a first PLMN, and the first PLMN is a PLMN to be accessed by the terminal device. The second processing unit is specifically configured to determine, based on the first information, whether to camp on a first candidate cell, where the first candidate cell supports the first PLMN, the first candidate cell satisfies a first camping condition, the first camping condition includes a cell selection criterion and a service requirement, and the service requirement is a preset threshold of a parameter reflecting signal quality of a cell. In this embodiment of this application, in a cell selection process, the terminal device considers both the cell selection criterion and the service requirement. The service requirement is a preset threshold of a parameter reflecting signal quality of a cell. Therefore, when selecting a cell for camping, the terminal device can preferentially select a cell that satisfies the service requirement. In comparison, information considered in methods of conventional technologies is not comprehensive. As a result, in some cases, although there is a cell that supports a lower priority PLMN and that has better signal strength, the terminal device still selects, based on PLMN priority information, a cell that supports a higher priority PLMN but has weaker signal strength. Alternatively, in a cell reselection process, although there is a cell that supports another PLMN and that has better signal quality, the terminal device still reselects and camps on a cell that supports a currently selected PLMN. By using the solution of this embodiment of the present invention, a problem that signal quality is relatively poor because the terminal device preferentially camps on a cell that satisfies only the cell selection criterion is avoided, thereby improving user experience. With reference to the fifth aspect, in a possible implementation of the fifth aspect, the service requirement includes at least one of the following: a preset threshold of reference signal received power of a cell, a preset threshold of an RRC link establishment failure rate of a cell, a preset threshold of an RLC block error rate BLER of a cell, and a preset threshold of a quantity of times of RLC reestablishment of a cell.

With reference to the fifth aspect, in another possible implementation of the fifth aspect, the second processing unit is specifically configured to search for the first candidate cell based on the first information. If the second processing unit finds the first candidate cell, the second processing unit is further configured to determine to camp on the first candidate cell.

With reference to the fifth aspect, in another possible implementation of the fifth aspect, the second processing unit is specifically configured to search for the first candidate cell based on the first information. If the second processing unit does not find the first candidate cell, the second processing unit is further configured to determine not to camp on the first candidate cell; and the second processing unit is further configured to determine a second candidate cell, where the second candidate cell includes a cell that is the first one found by the AS and that satisfies only the cell selection criterion.

With reference to the fifth aspect, in another possible implementation of the fifth aspect, the second processing unit is specifically configured to send first indication information to the first processing unit, where the first indication information indicates the first processing unit to redetermine a PLMN to be accessed by the terminal device. The second processing unit is further configured to receive second indication information sent by the first processing unit; and if the second indication information indicates that no PLMN is available, the second processing unit is specifically configured to determine to camp on the second candidate cell; or, if the second indication information includes identity information of a second PLMN, the second processing unit is specifically configured to determine, based on the second indication information, whether to camp on a third candidate cell, where the third candidate cell supports the second PLMN, and the third candidate cell satisfies the first camping condition.

With reference to the fifth aspect, in another possible implementation of the fifth aspect, the second processing unit is specifically configured to send information about a third PLMN to the first processing unit, where the third PLMN is a PLMN in an ambient environment found by the AS, and the information about the third PLMN includes identity information of the third PLMN and information about whether a cell supporting the third PLMN satisfies the service requirement. With reference to the fifth aspect, in another possible implementation of the fifth aspect, the second processing unit is specifically configured to search for a fourth PLMN in a full band, where the fourth PLMN is a PLMN in an ambient environment; and send second information to the first processing unit, where the second information includes identity information of the fourth PLMN and parameter information reflecting signal quality of a first cell, and the first cell is a cell supporting the fourth PLMN.

With reference to the fifth aspect, in another possible implementation of the fifth aspect, the second information further includes identity information of the first cell.

With reference to the fifth aspect, in another possible implementation of the fifth aspect, the first information further includes identity information of the first candidate cell, where the identity information of the first candidate cell is determined by the first processing unit based on the service requirement and the second information. The second processing unit is specifically configured to determine, based on the identity information of the first candidate cell, to camp on the first candidate cell.

According to a sixth aspect, a terminal device is provided, including a second processing unit, configured to receive first information sent by a first processing unit, where the first information includes identity information of a first PLMN, and the first PLMN is a PLMN to be accessed by the terminal device. The second processing unit is further configured to determine, based on the first information, to camp on a first candidate cell, where the first candidate cell supports the first PLMN. The second processing unit is further configured to determine whether the first candidate cell satisfies a first camping condition, where the first camping condition includes a cell selection criterion and a service requirement, and the service requirement is a preset threshold of a parameter reflecting signal quality of a cell.

With reference to the sixth aspect, in a possible implementation of the sixth aspect, the service requirement includes at least one of the following: a preset threshold of reference signal received power of a cell, a preset threshold of an RRC link establishment failure rate of a cell, a preset threshold of an RLC block error rate BLER of a cell, and a preset threshold of a quantity of times of RLC reestablishment of a cell.

With reference to the sixth aspect, in another possible implementation of the sixth aspect, the terminal device is configured with a barred cell list. The second processing unit is specifically configured to add identity information of the first candidate cell to the barred cell list; and set duration when the first candidate cell is barred.

With reference to the sixth aspect, in another possible implementation of the sixth aspect, the second processing unit is specifically configured to send first indication information to the first processing unit, where the first indication information indicates the first processing unit to redetermine a PLMN to be accessed by the terminal device; receive second indication information sent by the first processing unit; and if the second indication information indicates that no PLMN is available, search for a cell that satisfies the cell selection criterion in the barred cell list to camp on; or if the second indication information includes identity information of a second PLMN, determine, based on the second indication information, to camp on a third candidate cell, where the third candidate cell supports the second PLMN.

With reference to the sixth aspect, in another possible implementation of the sixth aspect, the second processing unit is specifically configured to determine that the terminal device satisfies a cell reselection condition, and determine whether a cell on which the terminal device currently camps satisfies the first camping condition; if the cell on which the terminal device currently camps satisfies the first camping condition, the second processing unit is configured to determine to reselect a cell that supports an equivalent PLMN and satisfies the first camping condition to camp on; if the cell on which the terminal device currently camps satisfies only the cell selection criterion, the second processing unit is configured to determine to preferentially reselect a cell that supports an equivalent PLMN and satisfies the first camping condition to camp on; or the second processing unit is configured to determine to reselect a cell that supports an equivalent PLMN and satisfies only the cell selection criterion to camp on.

According to a seventh aspect, a terminal device is provided, including a first processing unit. The first processing unit is configured to determine a first PLMN, where the first PLMN is a PLMN to be accessed by the terminal device. The first processing unit is further configured to send first information to a second processing unit, where the first information is used by the second processing unit to determine whether to camp on a first candidate cell, the first information includes identity information of the first PLMN, the first candidate cell supports the first PLMN, the first candidate cell satisfies a first camping condition, the first camping condition includes a cell selection criterion and a service requirement, and the service requirement is a preset threshold of a parameter reflecting signal quality of a cell.

With reference to the seventh aspect, in a possible implementation of the seventh aspect, the service requirement includes at least one of the following: a preset threshold of reference signal received power of a cell, a preset threshold of an RRC link establishment failure rate of a cell, a preset threshold of an RLC block error rate BLER of a cell, and a preset threshold of a quantity of times of RLC reestablishment of a cell.

With reference to the seventh aspect, in another possible implementation of the seventh aspect, the first processing unit is specifically configured to receive first indication information sent by the second processing unit, where the first indication information indicates the second processing unit to redetermine a PLMN to be accessed by the terminal device; and send second indication information to the second processing unit, where the second indication information indicates that no PLMN is available, so that the second processing unit determines to camp on a second candidate cell, and the second candidate cell is a cell that is the first one found by the second processing unit and that satisfies only the cell selection criterion; or the second indication information includes identity information of a second PLMN, where the second indication information is used by the second processing unit to determine whether to camp on a third candidate cell, the third candidate cell supports the second PLMN, and the third candidate cell satisfies the first camping condition. With reference to the seventh aspect, in another possible implementation of the seventh aspect, the first processing unit is specifically configured to receive information about a third PLMN sent by the second processing unit, where the third PLMN is a PLMN in an ambient environment found by the second processing unit, and the information about the third PLMN includes identity information of the third PLMN and information about whether a cell supporting the third PLMN satisfies the service requirement; and send second indication information to the second processing unit, where the second indication information includes identity information of a second PLMN, the second PLMN includes a PLMN supported by a cell that is in the third PLMN and that satisfies the service requirement, the second indication information is used by the second processing unit to determine whether to camp on a third candidate cell, the third candidate cell supports the second PLMN, and the third candidate cell satisfies the first camping condition.

With reference to the seventh aspect, in another possible implementation of the seventh aspect, the first processing unit is specifically configured to, if the second processing unit determines not to camp on the third candidate cell, send third indication information to the second processing unit, where the third indication information includes identity information of the second PLMN, the third indication information indicates the AS to camp on a second candidate cell, the second candidate cell supports the second PLMN, and the second candidate cell satisfies only the cell selection criterion.

With reference to the seventh aspect, in another possible implementation of the seventh aspect, the first processing unit is specifically configured to receive second information sent by the second processing unit, where the second information includes identity information of the fourth PLMN and parameter information reflecting signal quality of a first cell, the first cell is a cell supporting the fourth PLMN, and the fourth PLMN is a PLMN in an ambient environment searched by the second processing unit in a full band.

With reference to the seventh aspect, in another possible implementation of the seventh aspect, the first processing unit is specifically configured to determine that a PLMN corresponding to a cell that is in the first cell and whose parameter reflecting the signal quality of the first cell satisfies the service requirement is the first PLMN.

With reference to the seventh aspect, in another possible implementation of the seventh aspect, the second information further includes identity information of the first cell. The first processing unit is specifically configured to determine identity information of the first candidate cell based on the identity information of the first cell and the service requirement, where the identity information of the first candidate cell is used by the second processing unit to determine to camp on the first candidate cell.

According to an eighth aspect, a terminal device is provided, including a first processing unit, configured to determine a first PLMN, where the first PLMN is a PLMN to be accessed by the terminal device. The first processing unit is further configured to send first information to a second processing unit, where the first information is used by the second processing unit to determine to camp on a first candidate cell, and determine whether the first candidate cell satisfies a first camping condition, the first camping condition includes a cell selection criterion and a service requirement, the service requirement is a preset threshold of a parameter reflecting signal quality of a cell, and the first candidate cell supports the first PLMN.

With reference to the eighth aspect, in a possible implementation of the eighth aspect, the service requirement includes at least one of the following: a preset threshold of reference signal received power of a cell, a preset threshold of an RRC link establishment failure rate of a cell, a preset threshold of an RLC block error rate BLER of a cell, and a preset threshold of a quantity of times of RLC reestablishment of a cell.

With reference to the eighth aspect, in another possible implementation of the eighth aspect, the terminal device is configured a barred cell list. The barred cell list is used by the second processing unit to add identity information of the first candidate cell to the barred cell list when the second processing unit determines that the first candidate cell does not satisfy the first camping condition. With reference to the eighth aspect, in another possible implementation of the eighth aspect, the first processing unit is specifically configured to receive first indication information sent by the second processing unit, where the first indication information indicates the second processing unit to redetermine a PLMN to be accessed by the terminal device; and send second indication information to the second processing unit, where the second indication information indicates that no PLMN is available, and the second indication information is used by the second processing unit to determine to search for a cell that satisfies the cell selection criterion in the barred cell list to camp on; or the second indication information includes identity information of a second PLMN, where the second indication information is used by the second processing unit to determine to camp on a third candidate cell, and the third candidate cell supports the second PLMN.

With reference to the eighth aspect, in another possible implementation of the eighth aspect, the first processing unit is further configured to obtain equivalent PLMN information through a first network device.

With reference to the eighth aspect, in another possible implementation of the eighth aspect, the first processing unit is specifically configured to send a registration request message to the first network device, where the registration request message is used for requesting to register the terminal device with the first candidate cell, and the registration request message includes location information of the first candidate cell; and receive a registration request acknowledgment message sent by the first network device, where the registration request acknowledgment message includes the equivalent PLMN information, and the equivalent PLMN information is determined by the first network device based on the location information of the first candidate cell.

## BRIEF DESCRIPTION OF DRAWINGS

FIG. 1 is a schematic diagram of an application scenario applicable to an embodiment of this application;
FIG. 2(a) and FIG. 2(b) are a schematic flowchart of an existing cell selection method;
FIG. 3 is a schematic flowchart of a cell selection method according to an embodiment of this application;
FIG. 4 is another schematic flowchart of a cell selection method according to an embodiment of this application;
FIG. 5 is another schematic flowchart of a cell selection method according to an embodiment of this application;
FIG. 6 is another schematic flowchart of a cell selection method according to an embodiment of this application;
FIG. 7 is another schematic flowchart of a cell selection method according to an embodiment of this application;
FIG. 8 is another schematic flowchart of a cell selection method according to an embodiment of this application;
FIG. 9 is another schematic flowchart of a cell selection method according to an embodiment of this application;
FIG. 10 is a schematic diagram of a structure of a terminal device according to an embodiment of this application; and
FIG. 11 is a schematic diagram of a structure of a terminal device according to another embodiment of this application.

## DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, new radio (new radio, NR), or another evolved communication system.

The technical solutions provided in this application may be further applied to a future communication system, for example, a sixth generation mobile communication system. This is not limited in this application.

The technical solutions provided in this application may further be applied to machine type communication (machine type communication, MTC), long term evolution-machine (long term evolution-machine, LTE-M), a device-to-device (device-to-device, D2D) network, a machine to machine (machine to machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

A terminal device in embodiments of this application may be a device that provides a user with voice/data connectivity, for example, a handheld device or vehicle-mounted device having a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, or a terminal device in a future evolved public land mobile communication network (public land mobile network, PLMN). This is not limited in embodiments of this application.

By way of example, and not limitation, in embodiments of this application, the wearable device may alternatively be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generic wearable smart devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, in embodiments of this application, the terminal device may alternatively be a terminal device in an internet of things (internet of things, IoT) system. IoT is an important part of future development of information technologies. A main technical feature of the IoT is connecting things to a network by using a communication technology, to implement an intelligent network for human-machine interconnection and thing-thing interconnection.

A network device in embodiments of this application may be a device that provides a network access function for user equipment. The network device in embodiments of this application may include but is not limited to: a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a wireless relay node, a wireless backhaul node, a transmission point (transmission point, TP), or a transmission and reception point (transmission and reception point, TRP), and the like; or may be a gNB or a transmission point (TRP or TP) in a 5G (for example, NR) system, one or a group of (including a plurality of antenna panels) antenna panels of a base station in the 5G system, or may be a network node that forms a gNB or a transmission point, for example, a baseband unit (BBU), a distributed unit (distributed unit, DU), or a base station in a next-generation communication 6G system.

In some deployments, a gNB may include a central unit (central unit, CU) and a DU. The gNB may further include an active antenna unit (active antenna unit, AAU for short). The CU implements some functions of the gNB, and the DU implements some other functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of the following: a CU node, a DU node, and an AAU node.

The network device in embodiments of this application is configured to provide a service for a cell. The terminal device communicates with a cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell here may include a metro cell (metro cell), a micro cell (micro cell), a pico cell (pico cell), a femto cell (femto cell), and the like. These small cells have characteristics of small coverage and low transmit power, and are applicable to providing a high-rate data transmission service. The network device may include a base station (gNB), for example, a macro base station, a micro base station, an indoor hotspot, and a relay node. A function of the network device is to send a radio wave to a terminal device, to implement downlink data transmission, send scheduling information to control uplink transmission, receive a radio wave sent by the terminal device, and receive uplink data transmission.

In embodiments of this application, the user equipment or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software.

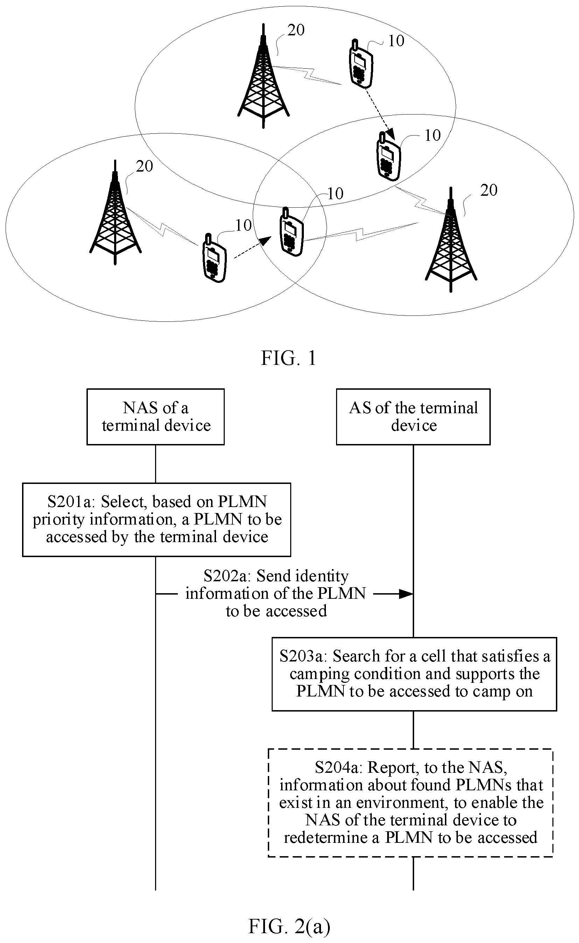

FIG. 1 is a schematic diagram of a communication scenario applicable to an embodiment of this application. As shown in FIG. 1, the application scenario includes terminal devices 10 and network devices 20. The network device 20 may be an access network device, for example, a base station. Each network device 20 includes one or more cells. When moving to a coverage area of a cell, the terminal device 10 may perform a cell selection or cell reselection procedure. The cell selection refers to a process in which the terminal device selects and camps on a cell that satisfies a condition when accessing a network for a first time. For example, the cell selection may be performed when the terminal device is powered on or re-accesses the network after being disconnected from the network. Alternatively, the cell selection may be performed when the terminal device enters an idle state from a connected state. The cell reselection refers to a process in which the terminal device reselects and camps on a cell when there is a cell with better signal quality than a current serving cell after the terminal device accesses a network. For example, the cell reselection may be performed when the terminal device is in an idle state.

Usually, existing cell selection may include two manners.

In a first manner, as shown in FIG. 2(a), when a terminal device is powered on or in another scenario, the following steps are performed. S201a: ANAS of the terminal device performs PLMN selection to select a PLMN to be accessed by the terminal device. S202a: The NAS sends, to an AS of the terminal device, the selected PLMN to be accessed by the terminal device. S203a: The AS of the terminal device performs a cell search procedure to search for a cell that supports the PLMN selected by the NAS and that satisfies a camping condition to camp on. Optionally, if the AS does not find the cell that supports the PLMN selected by the NAS and that satisfies the camping condition, S204a is performed: The AS reports, to the NAS, information about found PLMNs that exist in an environment, to enable the NAS of the terminal device continue to select at least one PLMN with a high priority from the found PLMNs. The foregoing steps are repeated until the terminal device finds a cell that satisfies the condition to camp on.

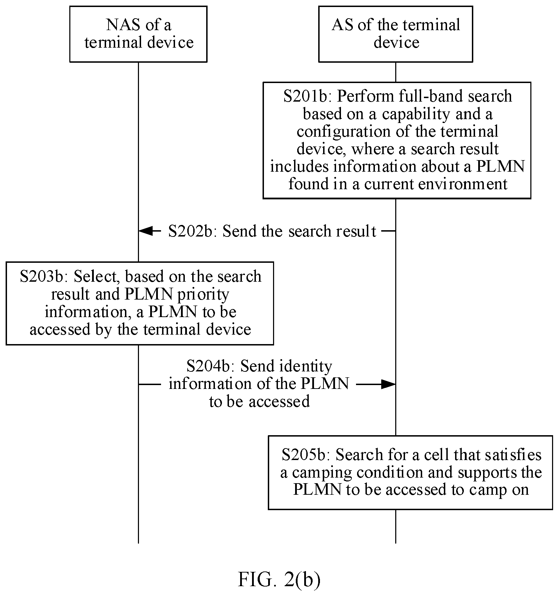

In a second manner, as shown in FIG. 2(b), similarly, when a terminal device is powered on or in another scenario, the following steps are first performed. S201b: An AS of the terminal device performs full-band search based on a capability and a configuration of the terminal device. S202b: The AS reports a search result to a NAS, where the search result may include identity information of a found PLMN in a current environment, reference signal received power of a cell supporting the PLMN, core network type (core network type, CN type) information, and the like. S203b: The NAS selects, based on the reported search result and PLMN priority information, a PLMN to be accessed by the terminal device. S204b: The NAS sends information about the selected PLMN to the AS, where the information may include identity information of the selected PLMN. Finally, the AS of the terminal device performs a cell search procedure to search for a cell that supports the PLMN selected by the NAS and satisfies a camping condition to camp on, to be specific, S205b is performed.

Specifically, in the foregoing two cell selection manners, that the NAS of the terminal device performs a PLMN selection procedure and selects a PLMN includes: The NAS of the terminal device may maintain a PLMN list, and select a PLMN from the PLMN list based on a priority order. Priorities of the PLMNs indicated by the PLMN priority order in a descending order may refer to registered RPLMNs (registered PLMN, RPLMN). A registered PLMN may be a PLMN registered by the terminal device before the terminal device is powered off or disconnected from a network last time, which is stored in a non-volatile memory (non-volatile memory) of the terminal device; an (equivalent) home PLMN ((equivalent) home PLMN, (E) HPLMN), to be specific, a PLMN that is considered as an equivalent PLMN of a home PLMN of the terminal device in a PLMN selection process or the home PLMN of the terminal device; a user controlled PLMN (user controlled PLMN, UPLMN); and an operator controlled PLMN (operator controlled PLMN, OPLMN), which may be stored in a universal subscriber identity module (universal subscriber identity module, USIM) of the terminal device.

After the PLMN is selected, the NAS of the terminal device may indicate, to the AS, a radio access technology (radio access technology, RAT) related to the selected PLMN, and indicate the AS of the terminal device to perform the cell selection procedure. The cell selection procedure may include the following steps.

First, the AS of the terminal device searches for a candidate cell based on a frequency sequence. Specifically, the terminal device may search for a candidate cell based on a capability and a configuration of the terminal device. The AS of the terminal device determines whether the candidate cell satisfies a camping condition.

As an example, determining whether a candidate cell satisfies the camping condition includes the following content.

(1) The cell satisfies a cell selection criterion (cell selection criterion), where the cell selection criterion is: Srxlev > 0 and Squal > 0, and may also be referred to as an S criteria for short. Srxlev indicates a cell selection reception (reception, RX) level value (cell selection RX level value (dB)), and Squal indicates a cell selection quality value (cell selection quality value (dB)). In an example, Srxlev and Squal may be respectively represented by using the following formulas:

$$\text{Srxlev} = \text{Qrxlevmeas} - (\text{Qrxlevmin} + \text{Qrxlevminoffset}) - \text{Pcompensation} - \text{Qoffsettemp} \quad (1)$$

$$\text{Squal} = \text{Qqualmeas} - (\text{Qqualmin} + \text{Qqualminoffset}) - \text{Qoffsettemp} \quad (2)$$

Parameters involved in the foregoing formulas are shown in Table 1.

**Table 1**

| $Q_{rxlevmeas}$ | Measured cell reception level value (measured cell RX level value) |
|---|---|
| $Q_{qualmeas}$ | Measured cell quality value (measured cell quality value) |
| $Q_{rxlevmin}$ | Minimum required reception level in the cell (unit: decibel-milliwatt (dBm)) (minimum required RX level in the cell) |
| $Q_{qualmin}$ | Minimum required quality level in the cell (unit: decibel (dB)) (minimum required quality level in the cell) |
| $Q_{rxlevminoffset}$ | Offset to the signaled $Q_{rxlevmin}$ taken into account in formula (1) (offset to the signalled $Q_{rxlevmin}$ taken into account in the Srxlev evaluation), where because it is required to periodically search for a PLMN with a higher priority during normally camping on a visited public land mobile network (visited public land mobile network, VPLMN), the offset to the signalled $Q_{rxlevmin}$ is taken into account in formula (1). |
| $Q_{qualminoffset}$ | Offset to the signalled $Q_{qualmin}$ taken into account in formula (2) (offset to the signalled $Q_{qualmin}$ taken into account in the Squal evaluation), where because it is required to periodically search for a PLMN with a higher priority during camping on the VPLMN, the offset to the signalled $Q_{qualmin}$ is taken into account in the Squal evaluation. |
| $P_{compensation}$ | $P_{compensation}$ is max ($P_{EMAX}$ - $P_{PowerClass}$, 0), where $P_{EMAX}$ is a maximum TX power level of a UE may use when transmitting on the uplink in the cell (maximum TX power level of a UE may use when transmitting on the uplink in the cell), $P_{PowerClass}$ is a maximum output power (maximum output power) that is determined based on a power class of the UE, and $P_{EMAX}$ is a maximum output power that the network device allows the UE to use. |
| $Qoffset_{temp}$ | Offset temporarily applied to a cell (unit: dB) (offset temporarily applied to a cell) |
| $P_{PowerClass}$ | Maximum radio frequency (radio frequency, RF) output power (unit: dBm) of the terminal device based on the power level of the terminal device, where $P_{PowerClass}$ represents a transmission capability of the UE. |

In some examples, $Q_{rxlevmeas}$ may be reference signal received power (reference signal received power, RSRP), and $Q_{qualmeas}$ may be reference signal received quality (reference signal received quality, RSRQ). Other parameters in formula (1) and formula (2) may be obtained from a system message.

(2) The PLMN corresponding to the cell is a PLMN selected by the NAS.

(3) The cell is not a barred cell.

If the candidate cell satisfies the camping condition, the AS of the terminal device determines to camp on the candidate cell.

Optionally, after successfully camping on a cell, the terminal device may further search for a cell with better signal quality based on cell reselection criteria (cell reselection criteria).

In an example, a condition for triggering cell reselection includes: For a candidate cell, Rn is greater than Rs within a preset time period. The condition may be referred to as a cell-ranking criteria (cell-ranking criteria), which may also be referred to as an R criteria for short. Rs and Rn respectively represent a cell-ranking criterion for a serving cell and a cell-ranking criterion for the candidate cell. In an example, Rs and Rn may be respectively represented by using the following formulas:

$$Rs = Q_{meas,s} + Q_{hyst} - Q_{offsettemp} \qquad (3)$$

$$Rn = Q_{meas,n} - Q_{offset} - Q_{offsettemp} \qquad (4)$$

$Q_{meas,s}$ and $Q_{meas,n}$ respectively represent reference signal received power (reference signal received power, RSRP) measured quality of the serving cell and the candidate cell used in cell selection, $Q_{hyst}$ represents a hysteresis value of the cell-ranking criteria, Qoffset represents an offset of the cell, and $Q_{offset_{temp}}$ represents an offset temporarily applied to the cell.

Parameters involved in formula (3) and formula (4) may be obtained from a system message. A length of the preset time period may be defined based on a standard, and the preset time period may be represented as $Treselection_{RAT}$. The length of the preset time period may vary in different cases. For example, a length of the preset time period when frequencies of the candidate cell and the serving cell are the same may be different from a length of the preset time period when the frequencies of the candidate cell and the serving cell are different.

In the foregoing process of calculating the cell selection and the cell reselection, the terminal device preferentially camps on a cell with a high priority PLMN. The cell may satisfy only the camping condition, but signal strength of the cell is not necessarily the best, which may affect user experience. For example, in a case where a cell #1 supporting a PLMN1 satisfies the camping condition, but a signal strength of the cell #1 is less than a first threshold, and a cell #2 supporting a PLMN2 satisfies the camping condition, and a signal strength is greater than the first threshold. A priority of the PLMN1 is higher than that of the PLMN2, based on an existing solution, the terminal device preferentially camps on the cell #1. Alternatively, in another case where there is a cell #3 that supports the PLMN1 and satisfies the cell reselection condition, based on an existing solution, the terminal device reselects and camps on the cell #3, without considering a cell with better signal quality in another equivalent PLMN to re-camp on.

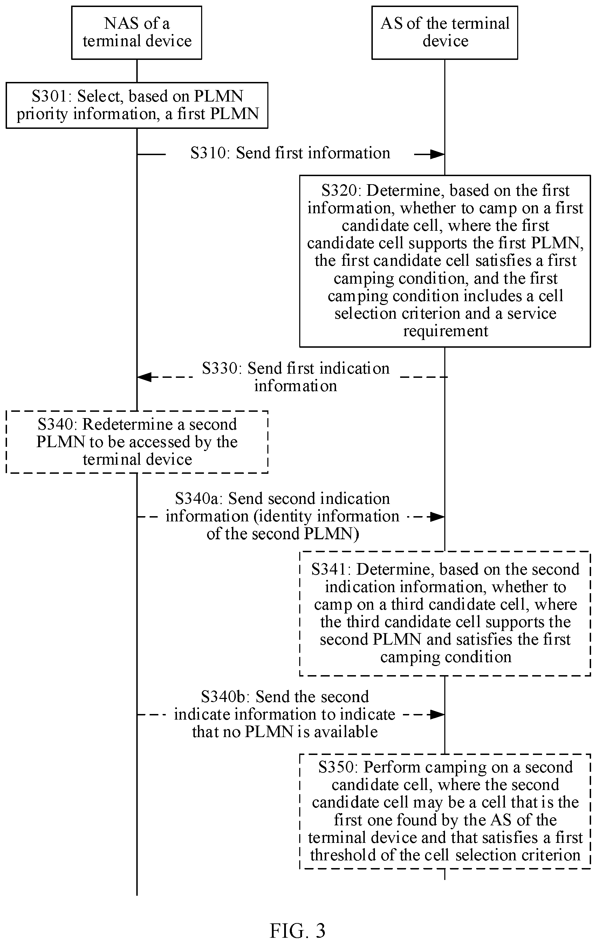

This application provides a cell selection method. The method can implement more flexible cell selection, thereby improving user experience. FIG. 3 is a schematic flowchart of a cell selection method according to an embodiment of this application. As shown in FIG. 3, the method includes at least the following several steps.

S301: A NAS of a terminal device performs a PLMN selection procedure, and selects a first PLMN. For example, the terminal device may maintain a PLMN list, and the NAS of the terminal device selects the first PLMN from the PLMN list based on a priority order. After the first PLMN is selected, the NAS of the terminal device may send first indication information to an AS. The first indication information includes identity information (Identity, ID) of the first PLMN. The first indication information may indicate the AS of the terminal device to perform a cell selection procedure.

S310: The access stratum AS of the terminal device receives first information sent by the non-access stratum NAS.

The first information includes the identity information of the first PLMN, and the first PLMN is a PLMN to be accessed by the terminal device. The first information is used by the AS to determine whether to camp on a first candidate cell, the first candidate cell supports the first PLMN, and the first candidate cell satisfies a first camping condition. The first camping condition includes a cell selection criterion and a service requirement. The cell selection criterion includes an S criterion, and the service requirement is a preset threshold of a parameter reflecting signal quality of a cell. For example, the service requirement may include at least one of the following: a preset threshold of reference signal received power of a cell, for example, - 84 dBm, a preset threshold of a radio resource control (radio resource control, RRC) link establishment failure rate of a cell, a preset threshold of a quantity of times of radio link control (radio link control, RLC) reestablishment of a cell, a preset threshold of an RLC block error rate (block error rate, BLER) of a cell, a preset threshold of a bit error rate or a packet loss rate of data transmission in a cell, and the like. The service requirement may be pre-configured in a USIM card of the terminal device, or may be obtained through calculation. For example, the service requirement may be a*Srxlev, or Srxlev+b, where a and b may be any constant, or Srxlev in the formula may be replaced with Squal. It may be understood that each preset threshold may be set based on an actual service requirement. This is not limited in this application.

S320: The AS of the terminal device determines, based on the first information, whether to camp on the first candidate cell.

In a possible implementation, the AS receives the first information, and searches, based on the identity information of the first PLMN, for the first candidate cell supporting the first PLMN. If the AS finds the first candidate cell, the AS determines that the terminal device camps on the first candidate cell.

Optionally, in a process of searching for the first candidate cell by the AS, the AS may further determine a second candidate cell. The second candidate cell is a cell that is found by the terminal device and that satisfies only the cell selection criterion. In a possible implementation, the second candidate cell may be a cell that is the first one found by the AS and that satisfies the cell selection criterion. It may be understood that the first candidate cell and the second candidate cell support a same PLMN, for example, the PLMN #1 with a high priority (an example of the first PLMN). Optionally, if the AS does not find the first candidate cell, S330 is performed: The AS feeds back first indication information to the NAS of the terminal device. Correspondingly, the NAS receives the first indication information. The first indication information indicates that the first candidate cell is not found, and indicates the NAS of the terminal device to reselect a PLMN to be accessed by the terminal device.

Optionally, the method further includes S330: The NAS of the terminal device reselects a PLMN to be accessed by the terminal device.

In a possible implementation, the NAS of the terminal device reselects a second PLMN. It may be understood that a priority of the second PLMN may be lower than that of the first PLMN. S340a: The NAS sends second indication information to the AS.

In a possible implementation, the second indication information includes identity information of the second PLMN, the second indication information is used by the AS to search for a third candidate cell supporting the second PLMN, and the third candidate cell satisfies the first camping condition. Step S330 and step S340a are repeated until the NAS traverses all PLMNs in the PLMN list, and if the AS does not find a candidate cell that satisfies the first camping condition, then S340b is performed: The NAS sends second indication information to the AS, where the second indication information indicates that no PLMN is available. Correspondingly, the AS receives the second indication information.

Optionally, the method may further include S350: The AS determines to camp on the second candidate cell.

In this embodiment of this application, in a cell selection process, the terminal device considers both the cell selection criterion and the service requirement. The service requirement is that a parameter reflecting signal quality of a cell satisfies a service threshold. Therefore, when selecting a cell for camping, the terminal device can preferentially select a cell that satisfies the service requirement. A problem that signal quality is relatively poor because the terminal device preferentially camps on a cell that satisfies only the cell selection criterion is avoided, thereby improving user experience.

Optionally, the terminal device searches for the first candidate cell and the second candidate cell through the cell selection procedure. The cell selection procedure may include two manners. One manner is referred to as a stored information cell selection (stored information cell selection) procedure, and means that the terminal device performs search based on priori information when having stored the priori information. The priori information is used to indicate cell information of a cell on which the terminal device has previously camped, for example, frequency information, a carrier frequency, and a cell parameter. For example, the terminal device may perform cell synchronization based on the cell frequency information in the priori information, and obtain a system message of a cell after the cell synchronization. The terminal device may search only in a cell in which cell information is stored, and then determine whether a found cell satisfies a first threshold or a second threshold. Another manner is referred to as an initial cell selection (initial cell selection) process, and means that when the terminal device does not store prior information, the terminal device performs full-band search based on a capability and a configuration of the terminal device, and then determines whether a found cell satisfies a first threshold or a second threshold.

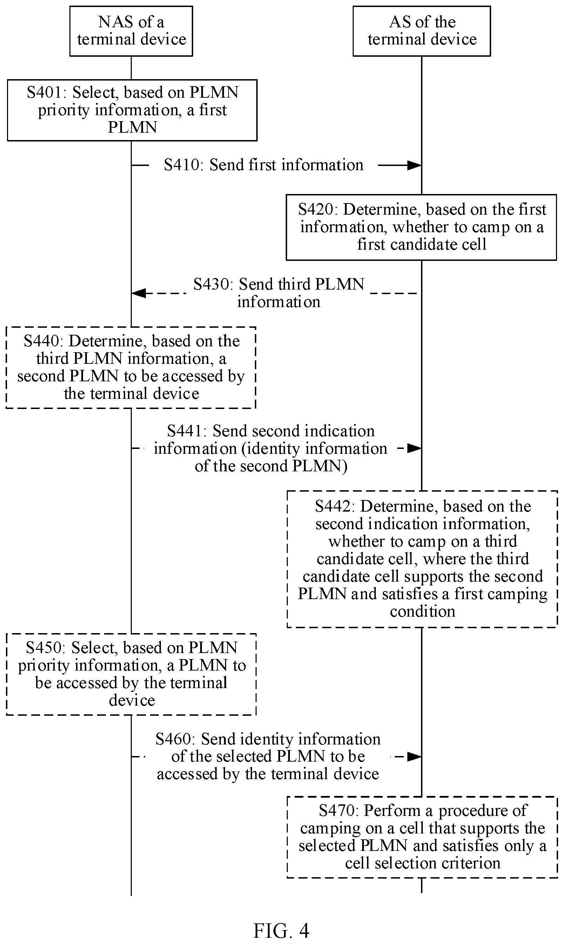

FIG. 4 is another schematic flowchart of a cell selection method according to an embodiment of this application. The method includes at least the following steps.

S401: A NAS of a terminal device performs a PLMN selection procedure, and selects a first PLMN. The process is similar to that in S301.

After the first PLMN is selected, S410 is performed: The NAS of the terminal device sends first information to an AS. The first information includes identity information of the first PLMN, and the first information is used by the AS of the terminal device to determine whether to camp on a first candidate cell that supports the first PLMN and satisfies a first camping condition. The process is similar to that in S310.

S420: The AS of the terminal device determines, based on the first information, whether to camp on the first candidate cell.

In a possible implementation, the AS receives the first information, and searches, based on the identity information of the first PLMN, for the first candidate cell supporting the first PLMN. If the AS finds the first candidate cell, the AS determines that the terminal device camps on the first candidate cell.

Optionally, if the AS does not find the first candidate cell, S430 is performed: The AS feeds back information about a third PLMN to the NAS of the terminal device. Correspondingly, the NAS receives the information about the third PLMN. The third PLMN is a PLMN in an ambient environment found by the AS, and the information about the third PLMN includes identity information of the third PLMN and information about whether a cell supporting the third PLMN satisfies the foregoing service requirement.

S440: The NAS of the terminal device selects a second PLMN based on the information about the third PLMN.

S441a: The NAS of the terminal device sends second indication information to the AS.

The second indication information includes identity information of the second PLMN, and the second indication information is used by the AS of the terminal device to determine whether to camp on a third candidate cell that supports the second PLMN and satisfies the first camping condition. That the NAS of the terminal device selects a second PLMN based on the information about the third PLMN includes: The NAS selects a PLMN supported by a cell that satisfies the service requirement in the third PLMN as the second PLMN. The second PLMN may be a PLMN whose priority is lower than that of the first PLMN.

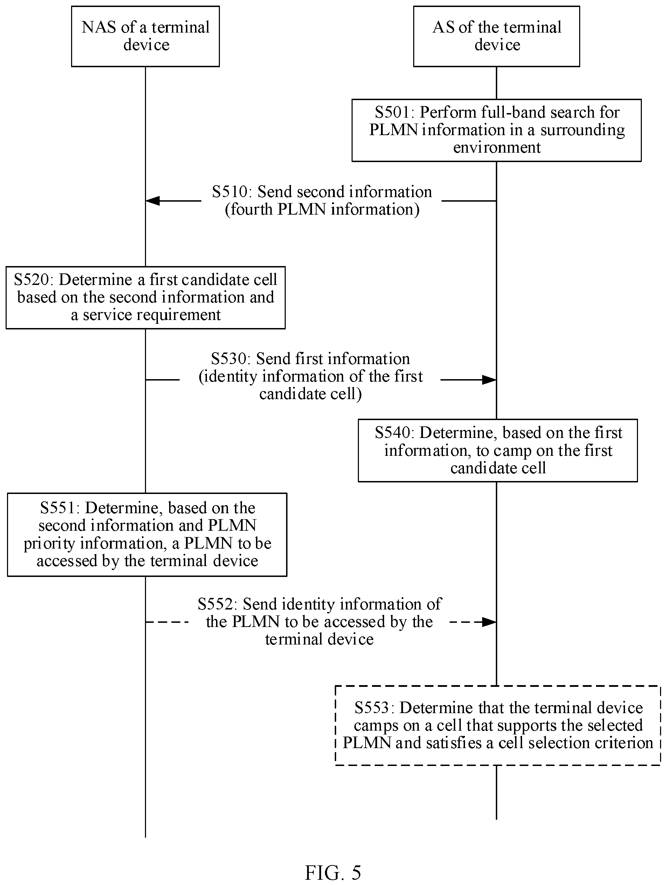

If the AS determines that the third candidate cell does not satisfy the first camping condition, S430 and S440 are repeatedly performed until the NAS traverses PLMNs supported by all cells that satisfy the service requirement in the third PLMN. If the AS does not find the first candidate cell that satisfies the first camping condition, S450 to S470 are performed. S450: The NAS selects, based on PLMN priority information, a PLMN to be accessed by the terminal device. S460: The NAS sends identity information of the redetermined PLMN to the AS. S470: The AS searches for a cell that supports the reselected PLMN and satisfies only a cell selection criterion to camp on. FIG. 5 is another schematic flowchart of a cell selection method according to an embodiment of this application. The method includes at least the following steps.

S501: An AS of a terminal device performs full-band search for PLMN information in an ambient environment based on a capability and a configuration of the terminal device.

S510: The AS sends second information to a NAS. Correspondingly, the NAS receives the second information. The second information includes fourth PLMN information, and a fourth PLMN is a PLMN in an ambient environment found by the AS.

Specifically, the fourth PLMN information includes identity information of the fourth PLMN, identity information of a first cell, and parameter information reflecting signal quality of the first cell, for example, RSRP of the first cell, where the first cell is a cell supporting the fourth PLMN. S520. The NAS selects a first candidate cell based on the second information and a service requirement.

Specifically, the NAS may select a first PLMN based on the reported second information in combination with PLMN priority information, and determine that a signal strength of the first candidate cell supporting the first PLMN is greater than the service requirement.

If the second information includes the first candidate cell supporting the first PLMN, S530 is performed: The NAS sends first information to the AS. The first information includes identity information of the first PLMN, and identity information of the first candidate cell. The first information is used by the AS of the terminal device to determine to camp on the first candidate cell.

S540. The AS of the terminal device camps on the first candidate cell.

Optionally, if the second information does not include the first PLMN, step S551 to step S553 are performed. To be specific, the NAS performs a PLMN selection procedure, and selects a high-priority PLMN based on the second information by performing S551. After the PLMN is selected, in S552, the NAS sends third indication information to the AS, where the third indication information includes identity information of the selected PLMN, and indicates the AS to perform a cell selection procedure. In S553, the AS determines to camp on a second candidate cell that supports the selected PLMN and satisfies a cell selection criterion.

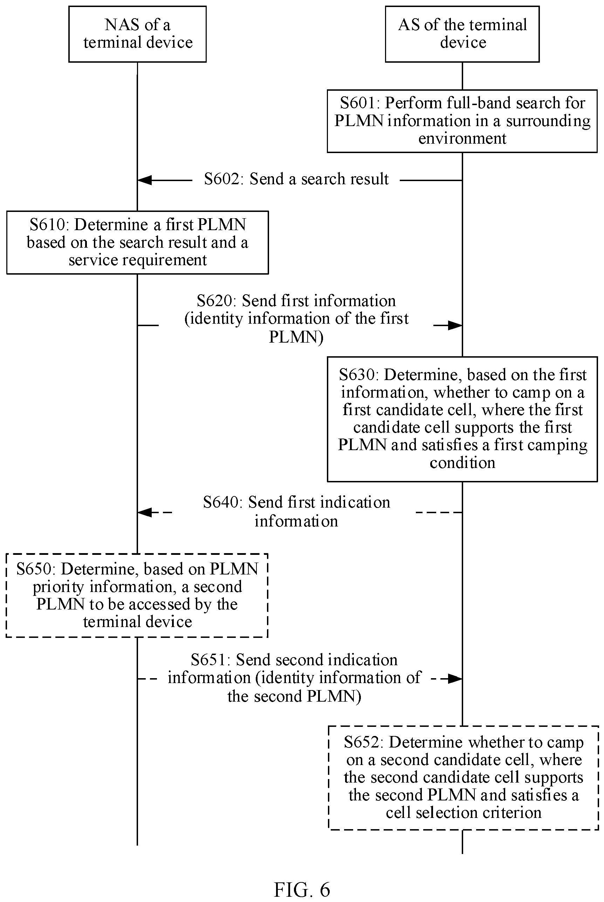

FIG. 6 is another schematic flowchart of a cell selection method according to an embodiment of this application. The method includes at least the following steps.

S601: An AS of a terminal device performs full-band search based on a capability and a configuration of the terminal device.

S602: The AS of the terminal device reports a search result to a NAS.

The process is similar to that in S201b. Details are not described herein again. Different from the second information reported in S501, the search result includes only identity information of a found PLMN in a current environment, and signal strength information of a cell supporting the PLMN in the current environment. For example, the signal strength information is represented by RSRP.

S610: The NAS selects a first PLMN based on the reported first search result and a service requirement. Specifically, the first PLMN may include a PLMN supported by a cell whose signal strength (for example, RSRP) is greater than a preset threshold.

If the search result includes the first PLMN, S620 is performed. The NAS sends first information to the AS, where the first information includes identity information of the first PLMN, and the first information is used by the AS of the terminal device to determine whether to camp on a first candidate cell that supports the first PLMN and satisfies a first camping condition.

S630: The AS determines, based on the first information, whether to camp on the first candidate cell, where the first candidate cell supports the first PLMN and satisfies the first camping condition. Specifically, the AS searches for the first candidate cell that supports the first PLMN.

If the AS finds the first candidate cell, the AS performs camping on the first candidate cell.

Optionally, if the AS does not find the first candidate cell, the AS sends first indication information to the NAS, where the first indication information indicates the NAS to redetermine a PLMN to be accessed by the terminal device. In other words, S640 is performed. The process is similar to that in S430. Details are not described herein again.

Optionally, the method further includes S650: The NAS redetermines, based on PLMN priority information, a second PLMN to be accessed by the terminal device.

S651: The NAS sends second indication information to the AS, where the second indication information indicates the second PLMN redetermined by the NAS, the second indication information is used by the AS to determine whether to camp on a second candidate cell, the second candidate cell supports the second PLMN, and the second candidate cell is a cell that satisfies only a cell selection criterion.

S660: The AS performs camping on the second candidate cell.

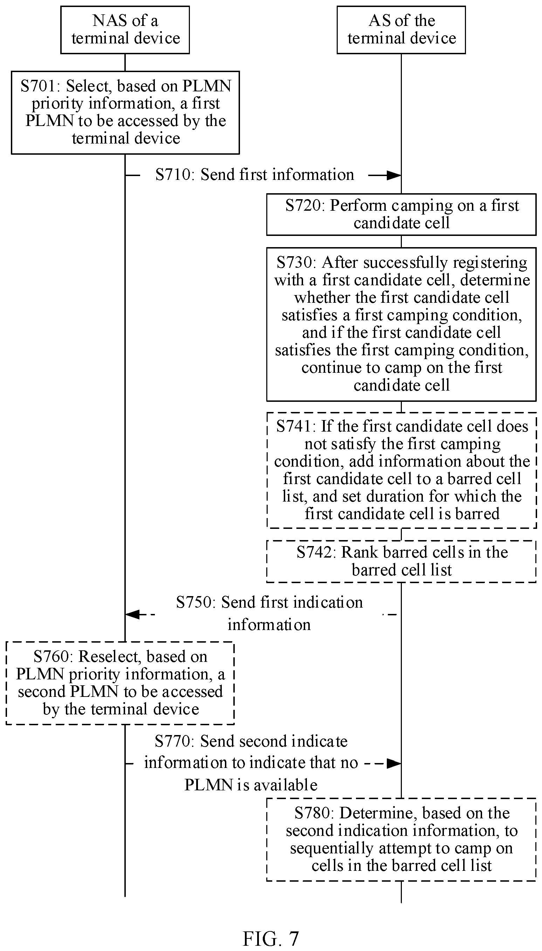

FIG. 7 is another schematic flowchart of a cell selection method according to an embodiment of this application. The method includes at least the following steps.

S701: ANAS of a terminal device performs a PLMN selection procedure, and selects a first PLMN. The process is similar to that in S301.

An AS of the terminal device maintains barred cell list information. Subsequently, the AS of the terminal device may add a found cell that does not satisfy a first camping condition to a barred cell list. Optionally, the AS may further add duration when the barred cell is barred to the barred cell list. After a cell that does not satisfy the first camping condition is marked as a barred cell, the AS of the terminal device excludes searching for the barred cell in a time period when the cell is barred. Optionally, after the time period when the cell is barred ends, the AS of the terminal device may further search for a previously barred cell. The duration when the cell is barred may be determined based on practice. This is not limited in embodiments of this application. For example, the duration when the cell is barred is 2 min.

After the first PLMN is selected, S710 is performed: The NAS of the terminal device sends first information to the AS, where the first information includes identity information of the first PLMN, the first information indicates the AS of the terminal device to perform a cell selection procedure and camp on a first candidate cell, and the first candidate cell is a cell that supports the first PLMN. S720: The AS of the terminal device camps on the first candidate cell.

In a possible implementation, the AS searches for a cell that supports the first PLMN and satisfies a cell selection criterion, in other words, searches for the first candidate cell. In addition, if a barred cell exists in the barred cell list maintained by the terminal device, the AS excludes, in a search process, a barred cell that does not time out.

S730: The AS performs registration with the first candidate cell.

S740: After the terminal device is successfully registered, the AS of the terminal device determines whether the first candidate cell satisfies the first camping condition.

If the first camping condition is satisfied, the terminal device continues to camp on the first candidate cell.

If the first camping condition is not satisfied, S741 is performed: The first candidate cell is added to the barred cell list, and duration when the first candidate cell is barred is set.

Optionally, the method may further include S742: The AS may further rank cells in the barred cell list based on signal strengths or service requirement completion degrees that can be provided. It should be understood that the service requirement completion degree may be understood as a value of a parameter that reflects signal quality of a cell, for example, an RRC link establishment failure rate or a quantity of times of RLC reestablishment.

S750: The AS sends first indication information to the NAS, where the first indication information includes information that the first candidate cell supporting the first PLMN does not satisfy the first camping condition, and the first indication information indicates the NAS to redetermine a to-be-accessed PLMN. Correspondingly, the NAS receives the first indication information, and S760 is performed: A second PLMN is reselected based on a PLMN priority list.

If the AS determines that a second candidate cell supporting the second PLMN does not satisfy the first camping condition, the foregoing steps are repeated until the NAS traverses the PLMN priority list and determines that no PLMN is available, and then S770 is performed: The NAS sends second indication information to the AS, where the second indication information indicates that no PLMN is available. Correspondingly, the AS receives the second indication information. S780: The AS determines, based on the second indication information, to sequentially attempt to camp on cells in the barred cell list.

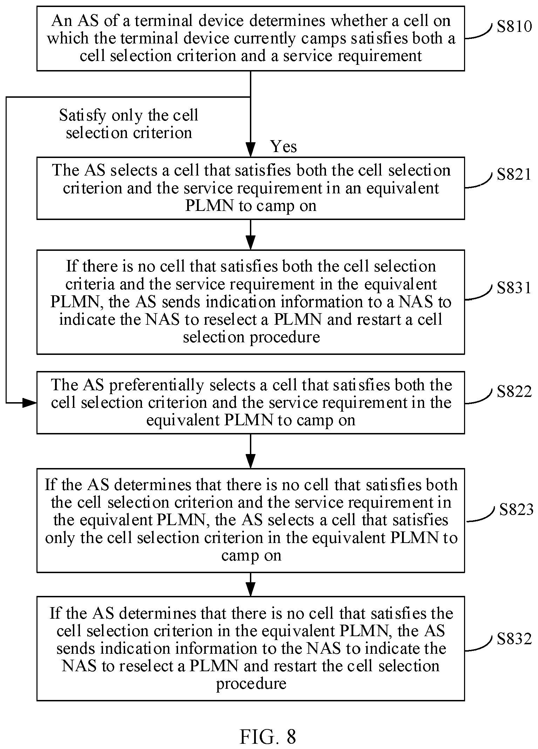

FIG. 8 is another schematic flowchart of a cell selection method according to an embodiment of this application.

In a cell selection solution provided in FIG. 8, assuming that a terminal device currently camps on a cell #1 (an example of a first candidate cell) that supports a first PLMN, the cell #1 may be determined by using any method provided in FIG. 3 to FIG. 7. When determining that the cell #1 currently satisfies a cell reselection condition in conventional technologies, the terminal device may perform cell reselection by using the method shown in FIG. 8. The method includes at least the following steps.

S810: An AS of the terminal device determines whether the cell on which the terminal device currently camps satisfies both a cell selection criterion and a service requirement.

S821: If the AS determines that the cell on which the terminal device currently camps satisfies both the cell selection criterion and the service requirement, the AS selects a cell that satisfies both the cell selection criterion and the service requirement in an equivalent PLMN to camp on.

In other words, if the cell on which the terminal device currently camps satisfies both the cell selection criterion and the service requirement, during cell reselection, the AS selects a reselected cell based on a same criterion, to be specific, selects a cell that satisfies both the cell selection criterion and the service requirement in the equivalent PLMN.

It should be understood that there may be one or more equivalent PLMNs. When there is one equivalent PLMN, the equivalent PLMN is a PLMN supported by the cell on which the terminal device currently camps. When there are a plurality of equivalent PLMNs, the equivalent PLMNs may further include PLMNs in an equivalent PLMN list delivered by a first network device.

For example, cells that support a PLMN #1 in the equivalent PLMN include a cell #1 and a cell #2. The cell #2 satisfies the cell selection criterion, and the cell #1 satisfies the cell selection criterion and the service requirement. In this case, the AS of the terminal device determines to select the cell #1 for camping.

If the AS determines that no cell satisfies both the cell selection criterion and the service requirement in the equivalent PLMN, S831 is performed: The AS sends indication information to the NAS to indicate the NAS to reselect a PLMN and start a cell selection procedure again. It may be understood that the restarted cell selection procedure may be the cell selection procedure provided in any one of FIG. 3 to FIG. 7.

S822: If the AS determines that the cell on which the terminal device currently camps on is a cell that satisfies only the cell selection criterion, the AS preferentially selects a cell that satisfies both the cell selection criterion and the service requirement in the equivalent PLMN to camp on.

In other words, even if the cell on which the terminal device currently camps can satisfy only the cell selection criterion, during cell reselection, the AS preferentially selects a reselected cell based on a criteria of the cell that satisfies both the cell selection criterion and the service requirement, in other words, selects a cell that satisfies both the cell selection criterion and the service requirement in the equivalent PLMN.

For example, when there is one equivalent PLMN, in other words, when the equivalent PLMN is a PLMN (the first PLMN) supported by a cell on which the terminal device currently camps, the AS preferentially selects a cell that satisfies both the cell selection criterion and the service requirement in the first PLMN to camp on. Alternatively, when there are a plurality of equivalent PLMNs, the AS preferentially selects a cell that satisfies both the cell selection criterion and the service requirement in the equivalent PLMNs to camp on.

S823: If the AS determines that no cell satisfies both the cell selection criterion and the service requirement in the equivalent PLMN, the AS selects a cell that satisfies only the cell selection criterion in the equivalent PLMN to camp on.

If the AS determines that no cell satisfies the cell selection criterion in the equivalent PLMN, S832 is performed: The AS sends indication information to the NAS to indicate the NAS to reselect a PLMN and start a cell selection procedure again.

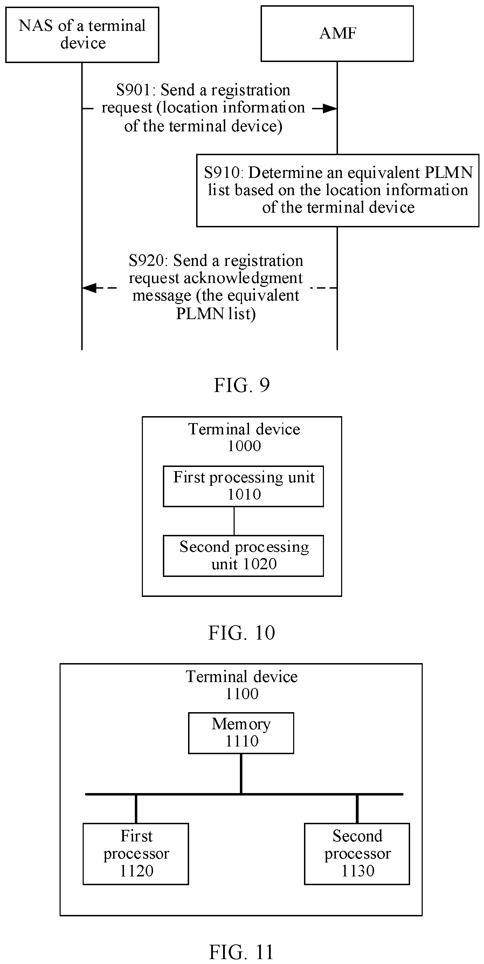

FIG. 9 is another schematic flowchart of a cell selection method according to an embodiment of this application. In a cell selection solution provided in FIG. 9, assuming that the terminal device determines to camp on a first candidate cell supporting a first PLMN, the first candidate cell supporting the first PLMN may be determined by using the method provided in any one of FIG. 4 to FIG. 7. The method includes at least the following steps.

Before S910, the method includes S901: ANAS of a terminal device sends a registration request message to a first network device.

The first network device may be an access and mobility management function (access and mobility management function, AMF) network element. The NAS of the terminal device sends the registration request message to the first network device, where the registration request message is used for requesting to register the terminal device with the first candidate cell that supports the first PLMN. Location information of the terminal device is carried in the registration request message. For example, the location information may include at least one of the following: identity information of the first candidate cell, identity information of the first PLMN, or global positioning system (global positioning system, GPS) geographic location information of the first candidate cell.

S910: The first network device determines an equivalent PLMN list based on the location information of the terminal device. The equivalent PLMN list may be the equivalent PLMN list of the first PLMN in S821.

S920: The first network device sends a registration request acknowledgment message to the terminal device, where the registration request acknowledgment message carries the equivalent PLMN list.

According to the method in this embodiment of this application, it can be ensured that the PLMN in an ambient environment of the terminal device is delivered to the terminal device. Subsequently, when a signal of a cell supporting the first PLMN becomes weak, for example, when the cell supporting the first PLMN subsequently becomes a cell that satisfies only a cell selection criterion but does not satisfy a service requirement, the terminal device may camp, by using a cell reselection procedure, on a cell that has better signal strength and that supports a PLMN in the equivalent PLMN list.

In the foregoing embodiments, sequence numbers of the processes do not mean execution sequences. The execution sequences of the processes should be determined based on functions and internal logic of the processes, and should not be construed as any limitation on the implementation processes of embodiments of this application.

The method provided in embodiments of this application is described above in detail with reference to FIG. 3 and FIG. 9. An apparatus provided in embodiments of this application is described below in detail with reference to FIG. 10 and FIG. 11.

FIG. 10 is a schematic diagram of a structure of a terminal device 1000 according to an embodiment of this application. The terminal device 1000 may be configured to perform the cell selection method or steps performed by the terminal device in method embodiments of this application. As shown in FIG. 10, the terminal device includes a first processing unit 1010 and a second processing unit 1020.

The first processing unit 1010 is configured to determine a PLMN to be accessed by the terminal device. The second processing unit 1020 is configured to enable an access stratum AS of the terminal device to receive first information sent by the first processing unit 1010. The first information includes identity information of the PLMN to be accessed by the terminal device. The second processing unit is further configured to determine, based on the first information, whether to camp on a first candidate cell, where the first candidate cell satisfies a first camping condition, the first camping condition includes a cell selection criterion and a service requirement, and the service requirement is that a parameter reflecting signal quality of a cell satisfies a service threshold.

The second processing unit is further configured to search for the first candidate cell. If the second processing unit finds the first candidate cell, the second processing unit is further configured to perform camping on the first candidate cell.

Optionally, if the second processing unit does not find the first candidate cell, the second processing unit is further configured to search for a third PLMN, where the third PLMN is a PLMN in an ambient environment found by the second processing unit.

Optionally, the second processing unit is further configured to determine a second candidate cell, where the second candidate cell is a cell that is found by the second processing unit and that satisfies only the cell selection criterion, and the second candidate cell supports the first PLMN. Optionally, the second processing unit is further configured to feed information about a third PLMN back to the first processing unit. The information about the third PLMN includes identity information of the third PLMN and information about whether a cell supporting the third PLMN satisfies the service requirement.

Optionally, the first processing unit is further configured to redetermine, based on the information about the third PLMN, the PLMN to be accessed by the terminal device.

Optionally, the first processing unit is further configured to determine that no PLMN is available. The first processing unit is specifically configured to send second indication information to the second processing unit, where the second indication information is used by the second processing unit to determine to camp on the second candidate cell.

It should be understood that the first processing unit may be configured to perform the method performed by the NAS of the terminal device in the method shown in FIG. 3 to FIG. 9. The second processing unit may be configured to perform the method performed by the AS of the terminal device in the method shown in FIG. 3 to FIG. 9.

FIG. 11 is a schematic diagram of a structure of a terminal device according to another embodiment of this application. The terminal device may be configured to perform the method or steps performed by the terminal device in method embodiments of this application. As shown in FIG. 11, the terminal device includes:

> a memory 1110, configured to store a program;
> a first processor 1120, configured to execute the program in the memory 1110; and
> a second processor 1130, configured to execute the program in the memory 1110.

In an example, when the program is executed, the first processor 1120 is configured to determine a PLMN to be accessed by the terminal device. The second processor 1130 is configured to receive first information sent by the first processor 1120. The first information includes identity information of the PLMN to be accessed by the terminal device. The second processor 1130 is further configured to determine, based on the first information, whether to camp on a first candidate cell, where the first candidate cell satisfies a first camping condition, the first camping condition includes a cell selection criterion and a service requirement, and the service requirement is that a parameter reflecting signal quality of a cell satisfies a service threshold.

In another example, when the program is executed, the first processor 1120 is configured to receive first information sent by the second processor 1130, where the first information includes identity information of a first PLMN, and the first PLMN is a PLMN to be accessed by the terminal device. The first processor 1120 determines, based on the first information, to camp on a first candidate cell, where the first candidate cell supports the first PLMN. The first processor 1120 determines whether the first candidate cell satisfies a first camping condition, where the first camping condition includes a cell selection criterion and a service requirement, and the service requirement is that a parameter reflecting signal quality of a cell satisfies a service threshold.

When the first processor 1120 and the second processor 1130 are chips, the chips each include a transceiver unit and a processing unit. The transceiver unit may be an input/output circuit or a communication interface. The processing unit may be a processor, a microprocessor, or an integrated circuit that is integrated on the chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to the embodiments of this application may be directly performed and completed by using a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. According to the method provided in embodiments of this application, this application further provides a computer program product. The computer program product includes computer program code. When the computer program code is run on a computer, the computer is enabled to perform the method in any one of embodiments shown in FIG. 4 to FIG. 10.

According to the method provided in embodiments of this application, this application further provides a computer-readable medium. The computer-readable medium stores program code. When the program code is run on a computer, the computer is enabled to perform the method in any one of embodiments shown in FIG. 3 to FIG. 9.

According to the method provided in embodiments of this application, this application further provides a system. The system includes the foregoing apparatus or device.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both an application that run on a computing device and the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A cell selection method, comprising:

   receiving, by an access stratum AS of a terminal device, first information sent by a non-access stratum NAS, wherein the first information comprises identity information of a first PLMN, and the first PLMN is a PLMN to be accessed by the terminal device; and
   determining, by the AS based on the first information, whether to camp on a first candidate cell, wherein the first candidate cell supports the first PLMN, the first candidate cell satisfies a first camping condition, the first camping condition comprises a cell selection criterion and a service requirement, and the service requirement is a preset threshold of a parameter reflecting signal quality of a cell.

2. The method according to claim 1, wherein the service requirement comprises at least one of the following:
   a preset threshold of reference signal received power of a cell, a preset threshold of a radio resource control RRC link establishment failure rate of a cell, a preset threshold of a radio link layer control RLC block error rate BLER of a cell, and a preset threshold of a quantity of times of RLC reestablishment of a cell.

3. The method according to claim 1 or 2, wherein the determining, by the AS based on the first information, whether to camp on a first candidate cell comprises:

   searching, by the AS, for the first candidate cell based on the first information; and
   if the AS finds the first candidate cell, determining, by the AS, to camp on the first candidate cell.

4. The method according to claim 1 or 2, wherein the determining, by the AS based on the first information, whether to camp on a first candidate cell comprises:

   searching, by the AS, for the first candidate cell based on the first information; and
   if the AS does not find the first candidate cell, determining, by the AS, not to camp on the first candidate cell; and

the method further comprises:
determining, by the AS, a second candidate cell, wherein the second candidate cell comprises a cell that is the first one found by the AS and that satisfies only the cell selection criterion.

5. The method according to claim 4, wherein after the determining, by the AS, a second candidate cell, the method further comprises:

sending, by the AS, first indication information to the NAS, wherein the first indication information indicates the NAS to redetermine a PLMN to be accessed by the terminal device;
receiving, by the AS, second indication information sent by the NAS; and
if the second indication information indicates that no PLMN is available, determining, by the AS, to camp on the second candidate cell; or
if the second indication information comprises identity information of a second PLMN, determining, by the AS based on the second indication information, whether to camp on a third candidate cell, wherein the third candidate cell supports the second PLMN, and the third candidate cell satisfies the first camping condition.

6. The method according to claim 4, wherein after the determining, by the AS, not to camp on the first candidate cell, the method comprises:
sending, by the AS, information about a third PLMN to the NAS, wherein the third PLMN is a PLMN in an ambient environment found by the AS, and the information about the third PLMN comprises identity information of the third PLMN and information about whether a cell supporting the third PLMN satisfies the service requirement.

7. The method according to claim 1 or 2, wherein before the receiving, by an access stratum AS of a terminal device, first information sent by a non-access stratum NAS, the method further comprises:

searching, by the AS, for a fourth PLMN in a full band, wherein the fourth PLMN is a PLMN in an ambient environment; and
sending, by the AS, second information to the NAS, wherein the second information comprises identity information of the fourth PLMN and parameter information reflecting signal quality of a first cell, and the first cell is a cell supporting the fourth PLMN.

8. The method according to claim 7, wherein the second information further comprises identity information of the first cell.

9. The method according to claim 8, wherein the first information further comprises identity information of the first candidate cell, the identity information of the first candidate cell is determined by the NAS based on the service requirement and the second information, and the determining, by the AS based on the first information, whether to camp on a first candidate cell comprises:
determining, by the AS based on the identity information of the first candidate cell, to camp on the first candidate cell.

10. A cell selection method, comprising:

receiving, by an access stratum AS of a terminal device, first information sent by a non-access stratum NAS, wherein the first information comprises identity information of a first PLMN, and the first PLMN is a PLMN to be accessed by the terminal device;
determining, by the AS based on the first information, to camp on a first candidate cell, wherein the first candidate cell supports the first PLMN; and
determining, by the AS, whether the first candidate cell satisfies a first camping condition, wherein the first camping condition comprises a cell selection criterion and a service requirement, and the service requirement is a preset threshold of a parameter reflecting signal quality of a cell.

11. The method according to claim 10, wherein the service requirement comprises at least one of the following:
a preset threshold of reference signal received power of a cell, a preset threshold of an RRC link establishment failure rate of a cell, a preset threshold of an RLC block error rate BLER of a cell, and a preset threshold of a quantity of times of RLC reestablishment of a cell.

12. The method according to claim 10 or 11, wherein the terminal device is configured with a barred cell list, and the method further comprises:

if the AS determines that the first candidate cell does not satisfy the first camping condition, adding, by the AS, identity information of the first candidate cell to the barred cell list; and

setting, by the AS, duration when the first candidate cell is barred.

13. The method according to claim 12, wherein the method further comprises:

sending, by the AS, first indication information to the NAS, wherein the first indication information indicates the NAS to redetermine a PLMN to be accessed by the terminal device;

receiving, by the AS, second indication information sent by the NAS; and

if the second indication information indicates that no PLMN is available, searching, by the AS, for a cell that satisfies the cell selection criterion in the barred cell list to camp on; or

if the second indication information comprises identity information of a second PLMN, determining, by the AS based on the second indication information, to camp on a third candidate cell, wherein the third candidate cell supports the second PLMN.

14. The method according to any one of claims 1 to 13, wherein the method further comprises:

determining, by the AS, that the terminal device satisfies a cell reselection condition;

determining, by the AS, whether a cell on which the terminal device currently camps satisfies the first camping condition; and

if the cell on which the terminal device currently camps satisfies the first camping condition, determining, by the AS, to reselect a cell that supports an equivalent PLMN and satisfies the first camping condition to camp on; if the cell on which the terminal device currently camps satisfies only the cell selection criterion, determining, by the AS, to preferentially reselect a cell that supports an equivalent PLMN and satisfies the first camping condition to camp on; or if there is no cell that satisfies the first camping condition in cells supporting an equivalent PLMN, determining, by the AS, to reselect a cell that supports an equivalent PLMN and satisfies only the cell selection criterion to camp on.

15. A cell selection method, comprising:

determining, by a non-access stratum NAS of a terminal device, a first PLMN, wherein the first PLMN is a PLMN to be accessed by the terminal device; and

sending, by the NAS, first information to an access stratum AS of the terminal device, wherein the first information is used by the AS to determine whether to camp on a first candidate cell, the first information comprises identity information of the first PLMN, the first candidate cell supports the first PLMN, the first candidate cell satisfies a first camping condition, the first camping condition comprises a cell selection criterion and a service requirement, and the service requirement is a preset threshold of a parameter reflecting signal quality of a cell.

16. The method according to claim 15, wherein the service requirement comprises at least one of the following: a preset threshold of reference signal received power of a cell, a preset threshold of an RRC link establishment failure rate of a cell, a preset threshold of an RLC block error rate BLER of a cell, and a preset threshold of a quantity of times of RLC reestablishment of a cell.

17. The method according to claim 15 or 16, wherein the method further comprises:

receiving, by the NAS, first indication information sent by the AS, wherein the first indication information indicates the NAS to redetermine a PLMN to be accessed by the terminal device; and

sending, by the NAS, second indication information to the AS, wherein the second indication information indicates that no PLMN is available, so that the AS determines to camp on a second candidate cell, wherein the second candidate cell is a cell that is the first one found by the AS and that satisfies only the cell selection criterion; or the second indication information comprises identity information of a second PLMN, the second indication information is used by the AS to determine whether to camp on a third candidate cell, the third candidate cell supports the second PLMN, and the third candidate cell satisfies the first camping condition.

18. The method according to claim 15 or 16, wherein the method further comprises:

receiving, by the NAS, information about a third PLMN sent by the AS, wherein the third PLMN is a PLMN in an ambient environment found by the AS, and the information about the third PLMN comprises identity information of the third PLMN and information about whether a cell supporting the third PLMN satisfies the service requirement; and

sending, by the NAS, second indication information to the AS, wherein the second indication information comprises identity information of a second PLMN, the second PLMN comprises a PLMN supported by a cell that is in the third PLMN and that satisfies the service requirement, the second indication information is used by the AS to determine whether to camp on a third candidate cell, the third candidate cell supports the second PLMN, and the third candidate cell satisfies the first camping condition.

19. The method according to claim 18, wherein the method further comprises:
if the AS determines not to camp on the third candidate cell, sending, by the NAS, third indication information to the AS, wherein the third indication information comprises the identity information of the second PLMN, the third indication information indicates the AS to camp on a second candidate cell, the second candidate cell supports the second PLMN, and the second candidate cell satisfies only the cell selection criterion.

20. The method according to claim 15 or 16, wherein before the determining, by a non-access stratum NAS of a terminal device, a first PLMN, the method further comprises:
receiving, by the NAS, second information sent by the AS, wherein the second information comprises identity information of a fourth PLMN and parameter information reflecting signal quality of a first cell, the first cell is a cell supporting the fourth PLMN, and the fourth PLMN is a PLMN in an ambient environment searched by the AS in a full band.

21. The method according to claim 20, wherein the determining, by a non-access stratum NAS of a terminal device, a first PLMN comprises:
determining, by the NAS, that a PLMN corresponding to a cell that is in the first cell and whose parameter reflecting the signal quality of the first cell satisfies the service requirement is the first PLMN.

22. The method according to claim 20, wherein the second information further comprises identity information of the first cell, and before the determining, by a non-access stratum NAS of a terminal device, a first PLMN, the method further comprises:
determining, by the NAS, identity information of the first candidate cell based on the identity information of the first cell and the service requirement, wherein the identity information of the first candidate cell is used by the AS to determine to camp on the first candidate cell.

23. A cell selection method, comprising:

determining, by a non-access stratum NAS of a terminal device, a first PLMN, wherein the first PLMN is a PLMN to be accessed by the terminal device; and

sending, by the NAS, first information to an access stratum AS of the terminal device, wherein the first information is used by the AS to determine to camp on a first candidate cell, and determine whether the first candidate cell satisfies a first camping condition, the first camping condition comprises a cell selection criterion and a service requirement, the service requirement is a preset threshold of a parameter reflecting signal quality of a cell, and the first candidate cell supports the first PLMN.

24. The method according to claim 23, wherein the service requirement comprises at least one of the following:
a preset threshold of reference signal received power of a cell, a preset threshold of an RRC link establishment failure rate of a cell, a preset threshold of an RLC block error rate BLER of a cell, and a preset threshold of a quantity of times of RLC reestablishment of a cell.

25. The method according to claim 23 or 24, wherein the terminal device is configured with a barred cell list, and the barred cell list is used to add identity information of the first candidate cell to the barred cell list when the AS determines that the first candidate cell does not satisfy the first camping condition.

26. The method according to claim 25, wherein the method further comprises:

receiving, by the NAS, first indication information sent by the AS, wherein the first indication information indicates the NAS to redetermine a PLMN to be accessed by the terminal device; and

sending, by the NAS, second indication information to the AS, wherein the second indication information indicates that no PLMN is available, and the second indication information is used by the AS to determine to search for a cell that satisfies the cell selection criterion in the barred cell list to camp on; or
the second indication information comprises identity information of a second PLMN, the second indication information is used by the AS to determine to camp on a third candidate cell, and the third candidate cell supports the second PLMN.

27. The method according to any one of claims 23 to 26, wherein the method further comprises:
obtaining, by the NAS, equivalent PLMN information through a first network device.

28. The method according to claim 27, wherein the obtaining, by the NAS, equivalent PLMN information through a first network device comprises:

sending, by the NAS, a registration request message to the first network device, wherein the registration request message is used for requesting to register the terminal device with the first candidate cell, and the registration request message comprises location information of the first candidate cell; and
receiving, by the NAS, a registration request acknowledgment message sent by the first network device, wherein the registration request acknowledgment message comprises the equivalent PLMN information, and the equivalent PLMN information is determined by the first network device based on the location information of the first candidate cell.

29. A terminal device, comprising:
a second processing unit, configured to call a computer program from a memory, wherein when the computer program is executed, the terminal device is enabled to perform the method according to any one of claims 1 to 9, or perform the method according to any one of claims 10 to 14.

30. A terminal device, comprising:
a first processing unit, configured to call a computer program from a memory, wherein when the computer program is executed, the terminal device is enabled to perform the method according to any one of claims 15 to 23, or perform the method according to any one of claims 24 to 28.

FIG. 1

| NAS of a terminal device | | AS of the terminal device |
| --- | --- | --- |

S201a: Select, based on PLMN priority information, a PLMN to be accessed by the terminal device

S202a: Send identity information of the PLMN to be accessed →

S203a: Search for a cell that satisfies a camping condition and supports the PLMN to be accessed to camp on

S204a: Report, to the NAS, information about found PLMNs that exist in an environment, to enable the NAS of the terminal device to redetermine a PLMN to be accessed

FIG. 2(a)

NAS of a terminal device

AS of the terminal device

S201b: Perform full-band search based on a capability and a configuration of the terminal device, where a search result includes information about a PLMN found in a current environment

S202b: Send the search result

S203b: Select, based on the search result and PLMN priority information, a PLMN to be accessed by the terminal device

S204b: Send identity information of the PLMN to be accessed

S205b: Search for a cell that satisfies a camping condition and supports the PLMN to be accessed to camp on

FIG. 2(b)

| NAS of a terminal device | | AS of the terminal device |
|---|---|---|

S301: Select, based on PLMN priority information, a first PLMN

S310: Send first information →

S320: Determine, based on the first information, whether to camp on a first candidate cell, where the first candidate cell supports the first PLMN, the first candidate cell satisfies a first camping condition, and the first camping condition includes a cell selection criterion and a service requirement

← S330: Send first indication information

S340: Redetermine a second PLMN to be accessed by the terminal device

S340a: Send second indication information (identity information of the second PLMN) →

S341: Determine, based on the second indication information, whether to camp on a third candidate cell, where the third candidate cell supports the second PLMN and satisfies the first camping condition

S340b: Send the second indicate information to indicate that no PLMN is available →

S350: Perform camping on a second candidate cell, where the second candidate cell may be a cell that is the first one found by the AS of the terminal device and that satisfies a first threshold of the cell selection criterion

FIG. 3

```
┌─────────────────┐                          ┌─────────────────┐
│   NAS of a      │                          │   AS of the     │
│ terminal device │                          │ terminal device │
└─────────────────┘                          └─────────────────┘
```

┌──────────────────────────────┐
│ S401: Select, based on PLMN  │
│ priority information, a first │
│            PLMN              │
└──────────────────────────────┘

├──— S410: Send first information ──→

┌────────────────────────────────────┐
│ S420: Determine, based on the first │
│ information, whether to camp on a   │
│        first candidate cell         │
└────────────────────────────────────┘

←──── S430: Send third PLMN ────
            information

┌ ─ ─ ─ ─ ─ ─ ─ ─ ─ ─ ─ ─ ─ ─ ─ ┐
│ S440: Determine, based on the │
│  third PLMN information, a     │
│ second PLMN to be accessed by  │
│       the terminal device      │
└ ─ ─ ─ ─ ─ ─ ─ ─ ─ ─ ─ ─ ─ ─ ─ ┘

├─ · S441: Send second indication
   information (identity information ─►
        of the second PLMN)

┌ ─ ─ ─ ─ ─ ─ ─ ─ ─ ─ ─ ─ ─ ─ ─ ─ ─ ┐
│   S442: Determine, based on the    │
│   second indication information,   │
│     whether to camp on a third     │
│   candidate cell, where the third  │
│ candidate cell supports the second │
│ PLMN and satisfies a first camping │
│            condition               │
└ ─ ─ ─ ─ ─ ─ ─ ─ ─ ─ ─ ─ ─ ─ ─ ─ ─ ┘

┌ ─ ─ ─ ─ ─ ─ ─ ─ ─ ─ ─ ─ ─ ─ ┐
│  S450: Select, based on PLMN │
│ priority information, a PLMN to │
│  be accessed by the terminal │
│            device             │
└ ─ ─ ─ ─ ─ ─ ─ ─ ─ ─ ─ ─ ─ ─ ┘

├─ · S460: Send identity information
      of the selected PLMN to be  ─►
    accessed by the terminal device

┌ ─ ─ ─ ─ ─ ─ ─ ─ ─ ─ ─ ─ ─ ─ ─ ┐
│   S470: Perform a procedure of │
│  camping on a cell that supports the │
│ selected PLMN and satisfies only a │
│       cell selection criterion │
└ ─ ─ ─ ─ ─ ─ ─ ─ ─ ─ ─ ─ ─ ─ ─ ┘

FIG. 4

NAS of a terminal
device

AS of the terminal
device

S501: Perform full-band search for
PLMN information in a surrounding
environment

S510: Send second information
(fourth PLMN information)

S520: Determine a first candidate cell
based on the second information and
a service requirement

S530: Send first information
(identity information of the first
candidate cell)

S540: Determine, based on the first
information, to camp on the first
candidate cell

S551: Determine, based on the
second information and PLMN
priority information, a PLMN to be
accessed by the terminal device

S552: Send identity information of
the PLMN to be accessed by the
terminal device

S553: Determine that the terminal device
camps on a cell that supports the selected
PLMN and satisfies a cell selection criterion

FIG. 5

NAS of a
terminal device

AS of the terminal
device

S601: Perform full-band search for
PLMN information in a surrounding
environment

S602: Send a search result

S610: Determine a first PLMN
based on the search result and a
service requirement

S620: Send first information
(identity information of the first
PLMN)

S630: Determine, based on the first
information, whether to camp on a
first candidate cell, where the first
candidate cell supports the first
PLMN and satisfies a first camping
condition

S640: Send first indication
information

S650: Determine, based on PLMN
priority information, a second
PLMN to be accessed by the
terminal device

S651: Send second indication
information (identity information of
the second PLMN)

S652: Determine whether to camp
on a second candidate cell, where
the second candidate cell supports
the second PLMN and satisfies a
cell selection criterion

FIG. 6

```
┌─────────────────────┐                          ┌─────────────────────┐
│      NAS of a       │                          │     AS of the       │
│   terminal device   │                          │   terminal device   │
└─────────────────────┘                          └─────────────────────┘
```

S701: Select, based on PLMN priority information, a first PLMN to be accessed by the terminal device

── S710: Send first information ──▶

S720: Perform camping on a first candidate cell

S730: After successfully registering with a first candidate cell, determine whether the first candidate cell satisfies a first camping condition, and if the first candidate cell satisfies the first camping condition, continue to camp on the first candidate cell

S741: If the first candidate cell does not satisfy the first camping condition, add information about the first candidate cell to a barred cell list, and set duration for which the first candidate cell is barred

S742: Rank barred cells in the barred cell list

◀── S750: Send first indication information

S760: Reselect, based on PLMN priority information, a second PLMN to be accessed by the terminal device

S770: Send second indicate information to indicate that no ──▶ PLMN is available

S780: Determine, based on the second indication information, to sequentially attempt to camp on cells in the barred cell list

FIG. 7

An AS of a terminal device determines whether a cell on which the terminal device currently camps satisfies both a cell selection criterion and a service requirement ⟋ S810

Satisfy only the cell selection criterion

Yes

The AS selects a cell that satisfies both the cell selection criterion and the service requirement in an equivalent PLMN to camp on ⟋ S821

If there is no cell that satisfies both the cell selection criteria and the service requirement in the equivalent PLMN, the AS sends indication information to a NAS to indicate the NAS to reselect a PLMN and restart a cell selection procedure ⟋ S831

The AS preferentially selects a cell that satisfies both the cell selection criterion and the service requirement in the equivalent PLMN to camp on ⟋ S822

If the AS determines that there is no cell that satisfies both the cell selection criterion and the service requirement in the equivalent PLMN, the AS selects a cell that satisfies only the cell selection criterion in the equivalent PLMN to camp on ⟋ S823

If the AS determines that there is no cell that satisfies the cell selection criterion in the equivalent PLMN, the AS sends indication information to the NAS to indicate the NAS to reselect a PLMN and restart the cell selection procedure ⟋ S832

FIG. 8

```
┌─────────────────────┐        ┌─────────────────────┐
│   NAS of a terminal │        │         AMF         │
│        device       │        │                     │
└─────────────────────┘        └─────────────────────┘
          │                               │
          │  S901: Send a registration    │
          ├─ request (location information ──▶│
          │     of the terminal device)   │
          │                               │
          │               ┌───────────────────────────────────┐
          │               │ S910: Determine an equivalent PLMN │
          │               │ list based on the location information │
          │               │       of the terminal device       │
          │               └───────────────────────────────────┘
          │                               │
          │       S920: Send a registration│
          │       request acknowledgment   │
          │◀─ ─ ─ message (the equivalent ─ ─ ─│
          │          PLMN list)            │
          │                               │
```

FIG. 9

```
┌─────────────────────────────────┐
│        Terminal device          │
│            1000                 │
│   ┌─────────────────────────┐   │
│   │  First processing unit  │   │
│   │          1010           │   │
│   └─────────────────────────┘   │
│              │                  │
│   ┌─────────────────────────┐   │
│   │   Second processing     │   │
│   │      unit 1020          │   │
│   └─────────────────────────┘   │
└─────────────────────────────────┘
```

FIG. 10

```
┌───────────────────────────────────────────┐
│             Terminal device               │
│                 1100                      │
│          ┌──────────────┐                 │
│          │   Memory     │                 │
│          │    1110      │                 │
│          └──────────────┘                 │
│                 │                         │
│   ┌─────────────┴─────────────────────┐   │
│   │                                   │   │
│ ┌──────────┐                 ┌──────────┐ │
│ │  First   │                 │  Second  │ │
│ │processor │                 │processor │ │
│ │  1120    │                 │  1130    │ │
│ └──────────┘                 └──────────┘ │
└───────────────────────────────────────────┘
```

FIG. 11

## INTERNATIONAL SEARCH REPORT

| International application No. |
| --- |
| **PCT/CN2022/087671** |

**A. CLASSIFICATION OF SUBJECT MATTER**

H04W 48/16(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, WPI, EPODOC, CNKI, 3GPP, GOOGLE: 非接入层, 接入层, 公共陆地移动网络, 选择, 驻留, 确定, 信号质量, 信号强度, NAS, AS, non-access stratum, access stratum, PLMN, public land mobile network, select, choose, reside, determine, quality, strength, signal

**C. DOCUMENTS CONSIDERED TO BE RELEVANT**

| Category* | Citation of document, with indication, where appropriate, of the relevant passages | Relevant to claim No. |
| --- | --- | --- |
| X | CN 109286963 A (SHANGHAI EIGEN COMMUNICATION TECHNOLOGY CO., LTD.) 29 January 2019 (2019-01-29) description, paragraphs 0023-0025 | 1-30 |
| A | 3GPP. "3rd Generation Partnership Project; Technical Specification Group Radio Access Network; Evolved Universal Terrestrial Radio Access (E-UTRA) and Evolved Universal Terrestrial Radio Access Network(E-UTRAN); Overall description; Stage 2 (Release 16)" *3GPP TS 36.300 V16.3.0 (2020-09)*, 30 September 2020 (2020-09-30), pp. 23-39 | 1-30 |
| A | CN 111866972 A (HUAWEI TECHNOLOGIES CO., LTD.) 30 October 2020 (2020-10-30) entire document | 1-30 |
| A | US 2018249386 A1 (HUAWEI TECHNOLOGIES CO., LTD.) 30 August 2018 (2018-08-30) entire document | 1-30 |
| A | WO 2020216167 A1 (HUAWEI TECHNOLOGIES CO., LTD.) 29 October 2020 (2020-10-29) entire document | 1-30 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 May 2022** | **30 May 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/087671**

| Patent document cited in search report | | | Publication date (day/month/year) | Patent family member(s) | | | Publication date (day/month/year) |
|---|---|---|---|---|---|---|---|
| CN | 109286963 | A | 29 January 2019 | None | | | |
| CN | 111866972 | A | 30 October 2020 | None | | | |
| US | 2018249386 | A1 | 30 August 2018 | CN | 107113685 | A | 29 August 2017 |
| | | | | WO | 2017070946 | A1 | 04 May 2017 |
| | | | | EP | 3361781 | A4 | 15 August 2018 |
| WO | 2020216167 | A1 | 29 October 2020 | EP | 3952445 | A1 | 09 February 2022 |

Form PCT/ISA/210 (patent family annex) (January 2015)

## REFERENCES CITED IN THE DESCRIPTION

**Patent documents cited in the description**

- CN 202110518513